# EUROPÄISCHE PATENTSCHRIFT

(11) **EP 4 468 992 B1**
(45) Veröffentlichungstag und Bekanntmachung des Hinweises auf die Patenterteilung: **03.06.2026**
(21) Anmeldenummer: 22843696.0
(22) Anmeldetag: 21.12.2022
(51) Int. Cl.: A61C 13/01, A61C 13/10

(54) **FRÄSROHLING UND VERFAHREN ZUR HERSTELLUNG EINES DENTALEN FORMKÖRPERS**
MILLING BLANK AND METHOD FOR PRODUCING A SHAPED DENTAL PRODUCT
ÉBAUCHE DE FRAISAGE ET PROCÉDÉ DE FABRICATION D'UN CORPS MOULÉ DENTAIRE

(30) Priorität: 28.01.2022 DE 102022101992
(43) Veröffentlichungstag der Anmeldung: 04.12.2024
(73) Patentinhaber: Kulzer GmbH, 63450 Hanau (DE)
(72) Erfinder: STANGE, Frank-Uwe, 88085 Langenargen (DE); MÖLLER, Matthias, 88097 Eriskirch (DE); RENZ, Karl-Heinz, 63820 Elsenfeld (DE); BERGER, Stephan, 88074 Meckenbeuren (DE)
(74) Vertreter: Kilian Kilian & Partner mbB
(86) Internationale Anmeldenummer: PCT/EP2022/087315
(87) Internationale Veröffentlichungsnummer: WO 2023/143838

(56) Entgegenhaltungen:
- EP-A1- 2 915 503
- EP-A1- 3 375 407
- EP-A1- 3 597 144
- EP-A1- 3 701 902
- CA-A1- 3 009 011
- US-A1- 2014 272 800

## Beschreibung

Die Erfindung betrifft einen Fräsrohling zur Herstellung eines dentalen Formkörpers, in Form einer dentalen Teil- oder Vollprothese oder einer Aufbissschiene, sowie ein Verfahren zur Herstellung eines dentalen Formkörpers unter Verwendung eines solchen Fräsrohlings. Der Fräsrohling ist zur subtraktiven Bearbeitung vorgesehen und geeignet und der daraus gefertigte dentale Formkörper muss zur Anwendung im dentalen Bereich in einen Mundraum eines Patienten einsetzbar sein.

Neben handwerklichen Techniken gewinnen digitale Fertigungsmethoden auch im Dentalbereich immer mehr an Bedeutung. Zahnersatz und andere dentale Formkörper, wie zum Beispiel Dentalprothesen, Kronen, Brücken und Aufbissschienen, werden seit einigen Jahren mittels CAD/CAM-Technologien subtraktiv in Fräsverfahren hergestellt (CAM - Computer-Aided Manufacturing, Deutsch: rechnerunterstützte Fertigung, CAD - Computer-Aided Design, Deutsch: rechnerunterstützte Konstruktion). Auch bei der Herstellung und dem Entwurf von dentalen Teil- und Vollprothesen mit Prothesenbasis zur Auflage auf der Gingiva und darin befestigten oder angeordneten Prothesenzähnen, werden zunehmend CAD/CAM-Verfahren angewendet.

Im Rahmen des digitalen Designs von prothetischen Arbeiten, insbesondere von Teil- oder Totalprothesen wird die Konstruktion in einen "weißen" oder zahnfarbenen Zahnanteil (die Prothesenzähne) und einen zahnfleischfarbenen ("rosa") Prothesenbasisanteil (die Prothesenbasis) aufgegliedert. Dentalprothesen bestehen folglich aus einer zahnfleischfarbenen beziehungsweise rosafarbenen Basis und zahnfarbenen Anteilen (Prothesenzähne oder Zahnsegmente).

Es gibt Verfahren, wie beispielsweise die aus der DE 10 2009 056 752 A1 oder der WO 2013/124 452 A1 bekannten Verfahren, bei denen eine dentale Teil- beziehungsweise Totalprothese digital aufgestellt und über CAD/CAM-Verfahren produziert wird. Aus dem Patent DE 103 04 757 B4 ist ein Verfahren zur Herstellung von Zahnersatz bekannt, bei dem eine virtuelle Aufstellung der Zähne in ein virtuelles Modell erfolgt und die Herstellung einer Prothesenbasis auf der Basis des virtuellen Modells erfolgt. Die EP 2 742 906 A1 offenbart ein Verfahren, bei dem ein Zahnbogen mit einer Abformmasse verbunden wird, wobei die Abformmasse in einem individualisierten Abformlöffel enthalten ist und einen Abdruck der Mundraumsituation des Patienten enthält. Die Oberfläche der Form mit dem Zahnbogen wird digitalisiert und anschließend rechnerisch ein virtuelles Modell des Zahnbogens möglichst passend in dem virtuellen Modell der Prothesenbasis positioniert und orientiert.

Im Rahmen der digitalen Totalprothetik oder Teilprothetik werden Prothesenzähne oder Zahnformkörper benötigt, die sich eindeutig und reproduzierbar mit der Prothesenbasis verkleben lassen.

Die WO 2016/091 762 A1 offenbart ein Verfahren zur Herstellung einer Dentalprothese, bei dem eine Schablone erzeugt wird, mit der mehrere Prothesenzähne in der gewünschten Lage und Orientierung zueinander an einer Prothesenbasis befestigt werden können. Die Prothesenzähne werden dabei durch basales Schleifen in einem zervikalen Bereich eingekürzt, um die gewünschte Bisshöhe herzustellen. Die WO 2016/110 392 A1 offenbart ein Verfahren zur Herstellung einer Dentalprothese, bei dem ein plastisch verformbares Verbindungsmittel in Zahnfächer einer Prothesenbasis eingebracht wird, um eine manuelle Korrektur der Ausrichtung der Prothesenzähne in der Prothesenbasis zu ermöglichen. Aus der DE 10 2008 019 694 B3 ist ein Verfahren und eine Einrichtung zur Herstellung dentaler Formkörper aus Keramik mit einem Laser bekannt. Aus der EP 2 571 451 B1 und der EP 2 666 438 A2 sind Verfahren zur Herstellung von Dentalprothesen bekannt, bei denen vorkonfektionierte Prothesenzähne in einer Halterung in Wachs eingebettet werden und anschließend zervikal mittels CAM-Verfahren abgefräst werden. Es ist notwendig, die Prothesenzähne basal (beziehungsweise zervikal) zu kürzen, um die Zahnhöhe an den Kiefer des Patienten anzupassen, also um die Bisshöhe der Dentalprothese passend zu den Bedürfnissen des Patienten einzustellen. Die WO 2014/159 436 A1 offenbart eine geschichtete Dentalprothese mit einer Verstärkung in der Prothesenbasis, die in einen basalen Hohlraum eingegossen wird. Neben Dentalprothesen können auch andere dentale Formkörper wie Aufbissschienen digital anhand von Patientendaten mit subtraktiven CAM-Verfahren hergestellt werden. Nachteilig ist bei solchen Aufbissschienen, dass diese eine ausreichende Abrasionsfestigkeit aufweisen müssen, was aber zahnseitig den Tragekomfort verringert. Zudem ist die Möglichkeit zur ästhetischen Veränderung von Aufbissschienen beschränkt.

Sowohl bei der additiven, wie auch bei der subtraktiven Fertigung stellen die Verbindung von Basis und zahnfarbenen Anteilen (Prothesenzähnen) eine erhebliche Herausforderung dar. Die Verbindung erfolgt in der Regel durch Verkleben, wobei die Qualität der Übergänge durch die Verwendung von zu wenig oder von zu viel Kleber wie auch die korrekte Positionierung der Prothesenzähne bei der Verklebung fehlerträchtig sind. Ebenfalls verfügbare einteilige zweifarbige (zahnfleischfarbene und zahnfarbene) Fräsrohlinge verfügen zwar über eine sehr gute Verbindung der Schichten, jedoch ist die Ästhetik aufgrund der vorgegebenen Phasengrenzen stets ein Kompromiss und damit unbefriedigend.

Die US 2013/0101962 A1 offenbart ein Verfahren zur Herstellung einer Dentalprothese, wobei bei dem Verfahren mehrere Vertiefungen entlang eines Zahnbogens in einen Block gefräst werden, wobei in die Vertiefungen mehrere Kunststoffe eingefüllt wird und zwischendurch aus den in den Vertiefungen ausgehärteten Kunststoffen die Prothesenzähne gefertigt werden. Der Block wird anschließend weitgehend abgetragen und aus dem Block die Prothesenbasis gefertigt. Es handelt sich bei dem Verfahren um ein mehrstufiges Fräsverfahren. Nachteilig sind bei dem Verfahren nach der US 2013/0101962 A1 der große Materialverlust und die beim Abtragen des Materials des Blocks benötigte Zeit sowie der Verschleiß der hierfür benötigten Werkzeuge. Aus der EP 2 915 503 B1 ist ein umgekehrtes Verfahren zur Herstellung einer Dentalprothese bekannt, bei dem ein Fräsrohling aus einem Zahnschmelzmaterial subtraktiv bearbeitet wird, um einen Hohlraum zu erzeugen, der als Negativform für eine Prothesenbasis einer Dentalprothese verwendet wird. Anschließend werden die okklusale Seite und die basale Seite der Dentalprothese subtraktiv aus dem so entstandenen Verbund hergestellt. Auch dies ist ein mehrstufiges Fräsverfahren. Nachteilig ist an dem Verfahren nach der EP 2 915 503 B1, dass sehr große Mengen des relativ harten Zahnschmelzmaterials entfernt werden müssen, um die Dentalprothesen zu fertigen. Damit geht nicht nur der Verlust einer großen Menge des Zahnschmelzmaterials einher, sondern die Fräswerkzeuge werden intensiv beansprucht und der Zeitaufwand zum Umsetzen des Verfahrens ist relativ groß. Des Weiteren können bei nicht vollständiger Entfernung des Zahnschmelzmaterials von den Außenseiten (der okklusalen und oralen Seite) der Prothesenbasis ästhetisch störende weiße beziehungsweise zahnfarbene Reste verbleiben, die anschließend manuell vom Zahntechniker entfernt werden müssen. Dadurch kann es wiederum zu einer ungewollten Verdünnung der Materialstärke der Prothesenbasis kommen.

Die CA 3 009 011 A1 offenbart ein Verfanren zur Herstellung einer Dentalprothese, bei der zuerst die zahnförmige Strukturen aus einem Fräskörper geformt werden. Anschließend wird der Fräskörper in einer Gießform befestigt und das Material für die Prothesenbasis injiziert und in der Gießform polymerisiert. Danach wird die Gießform entfernt und die Prothesenbasis aus dem polymerisierten Material herausgearbeitet. Aus der EP 3 597 144 A1 ist ein Verfahren zur Herstellung einer Dentalprothese aus einem Rohling mit zwei Materialien bekannt, wobei die Materialien entlang eines Zahnbogenverlaufs eine wellenförmige Verbindungsoberfläche aufweisen. Die EP 3 701 902 A1 und die US 2014/0272800 A1 offenbaren Verfahren zur Herstellung von Keramik-Kronen. Aus der EP 3 375 407 A1 ist ein Fräsrohling zur Herstellung einer Krone bekannt.

Für die Herstellung digital designter Totalprothesen bestehen im Stand der Technik folgende Möglichkeiten:
1. Fräsen oder Drucken der zahnfleischfarbenen Basis und Verkleben mit künstlichen Zähnen, alternativ mit gefrästen oder gedruckten zahnfarbenen Segmenten. Nachteile hierbei können sein: Ungenauigkeit der Fertigung, Zeitaufwand, ästhetische Herausforderungen aufgrund Kleberüberschüssen beziehungsweise Unterfüllung von Randspalten, Limitierungen bezüglich der Fräsbarkeit von Kavitäten aufgrund von Hinterschneidungen.
2. Fräsen von vorgefertigten Frässcheiben mit integrierter zweiphasiger Struktur. Dabei wird versucht, durch geschickte Anordnung der Übergänge eine natürliche Ästhetik zu erreichen. Nachteilig ist hierbei die Lage der Übergänge von zahnfleischfarben zu zahnfarben, die immer einen Kompromiss darstellt und ästhetisch unbefriedigend ist.
3. Fräsen von vorgeformten Formkörpern, in die vorkonfektionierte Zähne bereits integriert sind. Hauptsächlich wird bei diesen Verfahren nur die basale Seite der Prothese noch individuell angefertigt. Nachteilig ist hieran, dass die Kompatibilität mit individuellen Patientenfällen äußerst limitiert ist und viele Varianten von vorgeformten Formkörpers vorzuhalten sind.
4. Schichtweiser Aufbau einer Prothese bestehend aus zahnfarbenen Einzelschichten und einer Prothesenbasis durch mehrmaliges Fräsen und Wiederbefüllen der ausgefrästen Kavitäten. Nachteilig sind hieran der große Materialverlust und der Zeitaufwand.

Die Aufgabe der Erfindung besteht darin, die Nachteile des Stands der Technik zu überwinden. Insbesondere soll eine Möglichkeit gefunden werden, ein Verfahren und einen Fräskörper zur Herstellung eines dentalen Formkörpers aus zwei unterschiedlichen und miteinander fest verbundenen Materialien bereitzustellen, mit denen eine schnelle und ressourcenschonende Herstellung von dentalen Formkörpern mittels subtraktiver CAM-Verfahren möglich ist. Die Verbindung der Materialien soll ohne einen Klebstoff als Haftvermittler erfolgen. Insbesondere sollen die beiden Materialien im Rahmen des Verfahrens unmittelbar aneinandergefügt werden können. Hierfür soll der Fräskörper bereits geeignete Merkmale aufweisen, um das Verfahren möglichst leicht und unaufwendig umsetzen zu können. Das Verfahren soll für den Zahntechniker möglichst einfach und unaufwendig umsetzbar sein und der Fräskörper zur Umsetzung des Verfahrens geeignete Merkmale aufweisen. Insbesondere sollen vollautomatisierte oder möglichst weitgehend automatisierte Techniken wie CAD/CAM-Technologien genutzt werden und nutzbar sein.

Die Aufgaben der Erfindung werden gelöst durch einen Fräskörper nach Anspruch 1, ein Set nach Anspruch 8, ein Verfahren nach Anspruch 9 und einen dentalen Formkörper nach Anspruch 16. Bevorzugt Varianten werden mit den Unteransprüchen 2 bis 7, und 10 bis 15 beansprucht.

Die Aufgaben der Erfindung werden also gelöst durch einen Fräskörper zur Herstellung eines dentalen Formkörpers, wobei der Fräskörper einen Vollkörper aus einem ersten Material aufweist, wobei das erste Material biokompatibel ist, wobei auf einer Oberseite des Fräskörpers ein Hohlraum zur Aufnahme eines fluiden polymerisierbaren Kunststoffs angeordnet ist, wobei der Hohlraum einen Boden aufweist und der Hohlraum ausgehend vom Rand des Bodens seitlich durch eine umlaufende Wandung begrenzt ist, wobei die umlaufende Wandung ringförmig ist und wobei der Vollkörper den Boden bildet und sich der Vollkörper bis zu einer Unterseite des Fräskörpers erstreckt, die der Oberseite des Fräskörpers gegenüberliegend angeordnet ist, wobei der herzustellende dentale Formkörper eine Aufbissschiene ist, wobei das erste Material eine größere Härte aufweist als das ausgehärtete Kunststoffmaterial, oder der herzustellende dentale Formkörper eine Dentalprothese ist, wobei die Dentalprothese aus einer zahnfleischfarbenen beziehungsweise rosafarbenen Basis und zahnfarbenen Anteilen besteht.

Es kann theoretisch auch vorgesehen sein, dass auf der Unterseite des Fräskörpers bereichsweise oder auch vollflächig ein zweites Material aufgebracht ist, das dann formell die äußere Unterseite des Fräskörpers bildet. Insbesondere kann sich die Wandung bis zur Unterseite des Fräsköpers erstrecken und dort auch geringfügig überstehen. Es wird jedoch erfindungsgemäß bevorzugt, dass eine Oberfläche der Unterseite des Fräskörpers zumindest bereichsweise oder besonders bevorzugt vollständig durch das erste Material gebildet wird und dabei nicht von einem anderen Material abgedeckt wird, weil dies die Anwendung des Fräskörpers vereinfacht und den Aufbau kostengünstig gestaltet.

Es ist theoretisch möglich, die umlaufende Wandung durch ein separates Ringstück oder ein separates Rohrstück zu realisieren, das erst kurz vor der Anwendung beziehungsweise erst während eines Herstellungsverfahrens auf den Vollkörper aufgesteckt wird und dabei mit dem Vollkörper fest verbunden wird oder anderweitig mit dem Vollkörper fest verbunden wird. Eine solche Ausführung ist dadurch als erfindungsgemäß oder als zumindest als Äquivalent anzusehen.

Es kann vorgesehen sein, dass das erste Material ein Kunststoff ist oder eine Kunststoffzusammensetzung ist, bevorzugt ein Polymethylmethacrylat (PMMA) oder eine PMMA-haltige Kunststoffzusammensetzung und/oder ein Heiß-Polymerisat ist.

Eine ringförmige Wandung im Sinne der vorliegenden Erfindung weist eine Ausnehmung auf, die den geometrischen Mittelpunkt der Ausnehmung umschließt. Bevorzugt ist die Ausnehmung ohne Hinterschneidungen geformt und/oder jeder Punkt in der Ausnehmung ist in gerader Linie mit jedem anderen Punkt in der Ausnehmung verbindbar, ohne dass die gerade Linie innerhalb der umlaufenden Wandung verläuft. Bevorzugt ist die Ausnehmung ein kompakter geometrischer Körper.

Der Hohlraum hat vorzugsweise vor einer Bearbeitung mit einem Verfahren zur Herstellung des dentalen Formkörpers keine durch die äußere Oberfläche des herzustellenden dentalen Formkörpers unmittelbar vorgegebenen Oberflächen. Insbesondere keine Zahnkonturen, Zahnbögen und/oder Prothesenbasenkonturen. Lediglich die Abmessung kann und ist vorzugsweise auf typische oder maximale Größen von dentalen Formkörper abgestimmt sein.

Unter einem Fräskörper im Sinne der vorliegenden Erfindung wird ein Festkörper verstanden, der zum subtraktiven Bearbeiten mit Fräswerkzeugen geeignet ist und dessen geometrische Abmessungen zur Handhabung in CAM-Fräsmaschinen geeignet ist.

Bei erfindungsgemäßen Fräskörpern kann vorgesehen sein, dass die umlaufende Wandung eine Wandstärke von maximal 20 mm aufweist, bevorzugt von maximal 10 mm, besonders bevorzugt von maximal 5 mm aufweist. Auch kann vorgesehen sein, dass die umlaufende Wandung zumindest 5 mm hoch ist, bevorzugt zumindest 15 mm hoch ist.

Die Höhe der umlaufenden Wandung bezieht sich auf den Abstand der Oberkante der umlaufenden Wandung von der Ebene des Bodens des Hohlraums.

Bevorzugt weist die umlaufende Wandung eine gleichmäßige Wandstärke auf und/oder eine gleichmäßige Höhe.

Hierdurch ist der Fräskörper bezüglich seiner Abmessungen gut zur Verwendung als Halbzeug zur Herstellung von dentalen Formkörpern geeignet.

Es kann auch vorgesehen sein, dass der Fräskörper äußere Abmessungen zwischen 50 mm und 150 mm aufweist, insbesondere einen Durchmesser zwischen 50 mm und 150 mm aufweist. Derartige Abmessungen sind für dentale Formkörper sinnvoll und ausreichend.

Des Weiteren kann vorgesehen sein, dass an wenigstens einer den Hohlraum begrenzenden Innenseite der umlaufenden Wandung eine Markierung zum Bestimmen eines Füllstands in dem Hohlraum angeordnet ist, wobei bevorzugt die Markierung eine Skalierung mit äquidistanten Eichstrichen und/oder Zahlen aufweist, besonders bevorzugt eine Längenskala zum Bestimmen einer Füllhöhe oder eines Volumens des fluiden polymerisierbaren Kunststoffs in dem Hohlraum.

Hierdurch kann der Anwender gezielt die richtige gewünschte Menge an fluidem polymerisierbarem Kunststoff in den Hohlraum füllen. Dadurch wird einer Materialverschwendung entgegengewirkt und gleichzeitig die Zeit zum späteren subtraktiven Bearbeiten des Fräskörpers reduziert und so gegebenenfalls auch die Fräswerkzeuge geschont.

Als Markierung können auch Kerben in der Innenseite der umlaufenden Wandung angeordnet sein oder während eines erfindungsgemäßen Verfahrens eingearbeitet werden. die Kerben können zum Bestimmen der Füllhöhe verwendet werden, in die der fluide polymerisierbare Kunststoff eingefüllt werden kann. In die Kerben kann auch eine Stange oder ein Lineal mit passender Länge als Verlängerung über den Umfang hinaus eingesetzt werden. Das Lineal kann eine Repositionierung des Fräskörpers in der CAM-Vorrichtung erleichtern.

Ferner kann vorgesehen sein, dass der Boden des Hohlraums eben ist und/oder die umlaufende Wandung zum Inneren des Hohlraums hin eine zylindrische Oberfläche aufweist, wobei bevorzugt die umlaufende Wandung rohrförmig ist.

Hierdurch wird ein besonders einfach und kostengünstig zu fertigender Fräskörper bereitgestellt.

Es kann auch vorgesehen sein, dass die umlaufende Wandung des Fräskörpers durch eine Rohrstück oder einen Ringkörper gebildet ist, das oder der an dem Vollkörper fixiert ist, wobei bevorzugt der Fräskörper aus dem ersten Material und dem Rohrstück oder dem Ringkörper besteht, oder die umlaufende Wandung des Fräskörpers aus dem ersten Material besteht, wobei bevorzugt der Vollkörper und die umlaufende Wandung einteilig ausgeführt sind, so dass der Fräskörper aus dem ersten Material besteht.

Beide Maßnahmen erlauben eine einfache und kostengünstige Herstellung des Fräskörpers.

Bevorzugt kann vorgesehen sein, dass das Rohrstück oder der Ringkörper flüssigkeitsdicht mit dem Vollkörper verbunden ist. Ebenfalls kann vorgesehen sein, dass das Rohrstück oder der Ringkörper vollflächig und/oder umlaufend mit dem Vollkörper verklebt ist.

Bevorzugt kann auch vorgesehen sein, dass das erste Material ein erstes Kunststoffmaterial ist, wobei vorzugsweise das erste Kunststoffmaterial endgehärtet ist.

Kunststoffmaterialien lassen sich kostengünstig herstellen. Durch die Verwendung eines endgehärteten ersten Kunststoffmaterials kann eine Formveränderung nach dem Fräsen des ersten Kunststoffmaterials durch Nachhärten des ersten Kunststoffmaterials verhindert werden.

Ferner kann vorgesehen sein, dass das erste Material eine geschichtetes erstes Kunststoffmaterial mit mehreren Schichten unterschiedlicher Färbungen ist, wobei Schichtebenen der Schichten bevorzugt parallel zum Boden des Hohlraums angeordnet sind oder parallel zu einer Ebene angeordnet sind, die senkrecht zu der umlaufenden Wandung, insbesondere parallel zu einer Grundfläche einer zylindrischen Innenwand der umlaufenden Wandung angeordnet sind.

Durch diese Maßnahme kann ein ästhetisch ansprechender dentaler Formkörper aus dem ersten Material gefertigt werden. Das ist insbesondere für den Fall bedeutend, wenn Prothesenzähne aus dem ersten Material gefertigt werden. Daher handelt es sich bei dem ersten Material erfindungsgemäß bevorzugt um eine zahnfarbenes geschichtetes Material mit Schichtung unterschiedlicher zahnfarbener Färbungen, wobei bevorzugt in Richtung des Hohlraums tendenziell dunklere Schichten angeordnet sind. Bevorzugt ist das erste Material ein Multilayer-Material aus verschiedenfarbigen zahnfarbenen Schichten.

Des Weiteren kann vorgesehen sein, dass der Fräskörper eine Ronde ist mit einem zylindrischen Außenumfang ist, wobei die umlaufende Wandung einen Teilbereich des zylindrischen Außenumfangs bildet, wobei bevorzugt an der Außenseite des zylindrischen Außenumfangs eine Halterung zur Fixierung der Ronde an einer CAM-Vorrichtung angeordnet ist, wobei besonders bevorzugt die Halterung ein um den zylindrischen Außenumfang umlaufender vorstehender Ring ist.

Hierdurch kann der Fräskörper in einer beliebigen axialen Orientierung in einer CAM-Vorrichtung fixiert werden. Zudem kann der Fräskörper auf diese Weise auch repositioniert werden.

Es kann auch vorgesehen sein, dass der Vollkörper zusätzlich eine Abstufung im zylindrischen Außenumfang aufweist, auf den die umlaufende Wandung aufgesteckt und an dem die umlaufende Wandung befestigt oder befestigbar ist.

Es kann gemäß einer bevorzugten Ausführung vorgesehen sein, dass der Fräskörper an einer Oberfläche außerhalb des Hohlraums wenigstens eine Positionsmarkierung aufweist, die von außen sichtbar ist und die eine Bestimmung der Lage und Orientierung des Fräskörpers in der CAM-Vorrichtung erlaubt, wobei die wenigstens eine Positionsmarkierung bevorzugt im Bereich zumindest einer Kante des Fräskörpers angeordnet ist, die aus Richtung der Oberseite und/oder der Unterseite des Fräskörpers sichtbar ist, wobei besonders bevorzugt zumindest zwei Positionsmarkierungen vorgesehen sind, die sowohl von der Oberseite als auch von der Unterseite des Fräskörpers aus sichtbar sind.

Hierdurch kann die Lage und Orientierung des Fräskörpers in der CAM-Vorrichtung mit Hilfe einer Kamera oder mit Hilfe eines anderen Sensors (beispielsweise magnetisch) gemessen und dadurch überprüft werden.

Auch kann vorgesehen sein, dass das Volumen des Materials der umlaufenden Wandung höchstens halb so groß ist wie das Volumen des Hohlraums, bevorzugt das Volumen des Materials der umlaufenden Wandung höchsten ein Drittel so groß ist wie das Volumen des Hohlraums, besonders bevorzugt das Volumen des Materials der umlaufenden Wandung höchsten ein Fünftel so groß ist wie das Volumen des Hohlraums.

Hierdurch wird eine größere Materialeinsparung erreicht. Zudem wird so die Möglichkeit eröffnet, ein größeres Volumen für einen einzufüllenden fluiden polymerisierbaren Kunststoff bereitzustellen. Dadurch kann ein größerer beziehungsweise voluminöserer Teil des dentalen Formkörpers aus dem ausgehärteten Kunststoffmaterial gefertigt werden, das durch Aushärten des fluiden polymerisierbaren Kunststoffs gebildet wird.

Des Weiteren kann vorgesehen sein, dass der Vollkörper eine umlaufende Stufe aufweist, auf die die umlaufende Wandung aufgesteckt ist, so dass die umlaufende Wandung mit einer Innenseite flächenbündig an dem Vollkörper anliegt, wobei bevorzugt die umlaufende Wandung vollflächig und umlaufend an den Vollkörper angeklebt ist.

Hierdurch wird die Fertigung vereinfacht und die umlaufende Wandung kann wiederverwertet werden. Bevorzugt kann zu diesem Zweck auch vorgesehen sein, dass der Vollkörper zumindest eine stufenförmige umlaufende Kante zum Anlegen eines Ringkörpers oder eines Rohrstücks als umlaufende Wandung aufweist.

Die der vorliegenden Erfindung zugrundeliegenden Aufgaben werden auch gelöst durch ein Set zum Herstellen eines dentalen Formkörpers aufweisend einen oben beschriebenen erfindungsgemäßen Fräskörper und zumindest einen fluiden polymerisierbaren Kunststoff und/oder Ausgangskomponenten zur Herstellung zumindest eines fluiden polymerisierbaren Kunststoffs, wobei bevorzugt das Set zusätzlich zumindest eine Vorrichtung zum Einfüllen des zumindest einen fluiden polymerisierbaren Kunststoffs und/oder zum Herstellen und Mischen des zumindest einen fluiden polymerisierbaren Kunststoffs aufweist, wobei der herzustellende dentale Formkörper eine Aufbissschiene ist, wobei das erste Material eine größere Härte aufweist als das ausgehärtete Kunststoffmaterial, oder der herzustellende dentale Formkörper eine Dentalprothese ist, wobei die Dentalprothese aus einer zahnfleischfarbenen beziehungsweise rosafarbenen Basis und zahnfarbenen Anteilen besteht.

Der fluide polymerisierbare Kunststoff kann auch sehr zähflüssig sein, muss dann aber bei Raumtemperatur oder bei Anwendungstemperatur zumindest pastös und modellierbar sein, ist aber bevorzugt dünnflüssig. Ein dünnflüssiger Kunststoff hat die Viskosität im Bereich von Wasser oder von Rapsöl bei Raumtemperatur.

Das Set erlaubt die vollständige Fertigung des dentalen Formkörpers aus zwei unterschiedlichen Materialien und komplettiert auf diese Weise die Vorrichtung.

Die der vorliegenden Erfindung zugrundeliegenden Aufgaben werden ferner gelöst durch ein Verfahren zur Herstellung eines dentalen Formkörpers unter Verwendung eines oben beschriebenen Fräskörpers oder unter Verwendung eines solchen Sets oder unter Verwendung eines Fräskörper zur Herstellung eines dentalen Formkörpers, wobei der Fräskörper einen Vollkörper aus einem ersten Material aufweist, wobei das erste Material biokompatibel ist, wobei auf einer Oberseite des Fräskörpers ein Hohlraum zur Aufnahme eines fluiden polymerisierbaren Kunststoffs angeordnet ist, wobei der Hohlraum einen Boden aufweist und der Hohlraum ausgehend vom Rand des Bodens seitlich durch eine umlaufende Wandung begrenzt ist, wobei die umlaufende Wandung ringförmig ist und wobei der Vollkörper den Boden bildet und sich der Vollkörper bis zu einer Unterseite des Fräskörpers erstreckt, die der Oberseite des Fräskörpers gegenüberliegend angeordnet ist, wobei bei dem Verfahren der dentale Formkörper aus zumindest zwei unterschiedlichen Materialien gefertigt wird, die bei dem Verfahren miteinander verbunden werden, wobei das Verfahren durch die folgenden chronologischen Schritte gekennzeichnet ist:
A) Herstellen einer Verbindungsoberfläche, wobei die Verbindungsoberfläche die Fläche zwischen dem ersten Material und dem aus dem fluiden polymerisierbaren Kunststoff herzustellenden ausgehärteten Kunststoffmaterial in dem herzustellenden dentalen Formkörper definiert, und Herstellen einer Negativform eines Teilbereichs der Oberfläche des herzustellenden dentalen Formkörpers in dem Boden des Hohlraums des Fräskörpers und somit in dem ersten Material des Fräskörpers mit Hilfe eines subtraktiven CAM-Verfahrens nach Maßgabe eines virtuellen dreidimensionalen Modells einer äußeren Form des dentalen Formkörpers und einer virtuellen Form der Verbindungsoberfläche der zumindest zwei unterschiedlichen Materialien, wobei die Verbindungsoberfläche und die Negativform aneinander angrenzen und wobei die umlaufende Wandung des Fräskörpers erhalten bleibt;
B) Einfüllen zumindest eines fluiden polymerisierbaren Kunststoffs in den Hohlraum des Fräskörpers und in das in Schritt A) abgetragene Volumen im Boden des Fräskörpers, wobei der zumindest eine fluide polymerisierbare Kunststoff mit einem derartigen Füllstand in den Hohlraum gefüllt wird, dass die umlaufende Wandung in Kontakt mit wenigstens einem zuletzt eingefülltem oder außen aufgetragenem fluiden polymerisierbaren Kunststoff des zumindest einen fluiden polymerisierbaren Kunststoffs kommt, und Aushärten des zumindest einen fluiden polymerisierbaren Kunststoffs in dem Hohlraum und in dem in Schritt A) abgetragenen Volumen im Boden des Fräskörpers, wobei beim Aushärten des zumindest einen fluiden polymerisierbaren Kunststoffs ein ausgehärtetes Kunststoffmaterial im Hohlraum des Fräskörpers entsteht, das mit dem ersten Material des Fräskörpers fest und flächenbündig verbunden ist;
C) Subtraktives Bearbeiten des ausgehärteten Kunststoffmaterials aus Richtung der Oberseite des Fräskörpers mit einem CAM-Verfahren nach Maßgabe einer basalen Oberfläche des virtuellen Modells des dentalen Formkörpers und subtraktives Bearbeiten des ersten Materials aus Richtung der Unterseite des Fräskörpers mit einem CAM-Verfahren nach Maßgabe einer okklusalen Oberfläche des virtuellen Modells des dentalen Formkörpers, so dass der dentale Formkörper aus dem ausgehärteten Kunststoffmaterial und dem damit verbundenen ersten Material subtraktiv herausgearbeitet wird.

Es kann erfindungsgemäß vorgesehen sein, dass in Schritt C) ein basales subtraktives Bearbeiten des ausgehärteten Kunststoffmaterials aus Richtung der Oberseite des Fräskörpers erfolgt und ein okklusales subtraktives Bearbeiten des ersten Materials aus Richtung der Unterseite des Fräskörpers.

Das erste Material weist erfindungsgemäß bevorzugt eine größere Abrasionsfestigkeit auf, als das ausgehärtete Kunststoffmaterial, das durch Polymerisation des fluiden polymerisierbaren Kunststoffs entsteht.

Unter einem dentalen Formkörper sind Formkörper zu verstehen, die in der Dentalmedizin oder bei der dentalen Pflege zum Einsatz kommen und deren äußere Form einen Bezug zu anatomisch spezifischen Oberflächen im Mundraum eines Patienten haben. Beispiel hierfür sind Dentalprothesen, dentale Teilprothesen, dentale Vollprothesen, auch mit einzelnen Zähnen oder Zahnteilen, Aufbissschienen, kieferorthopädische Spangen und Teile von solchen und derartigen Formkörpern.

Erfindungsgemäß bevorzugt handelt es sich bei dem aus dem Fräskörper herzustellenden dentalen Formkörper um eine Dentalprothese. Die Fräskörper sind zur Herstellung von Dentalprothesen besonders gut geeignet, beziehungsweise die Vorteile der vorliegenden Erfindung wirken sich besonders stark aus, wenn mit der Fräsronde eine Dentalprothese hergestellt wird. Das gleiche gilt für das erfindungsgemäße Verfahren, das ebenfalls besonders gut zur Herstellung von Dentalprothesen geeignet ist.

Der Unterschied zwischen den zumindest zwei unterschiedlichen Materialien kann in einer unterschiedlichen Färbung der zumindest zwei unterschiedlichen Materialien liegen aber auch alternativ oder zusätzlich durch andere unterschiedliche physikalische Eigenschaften realisiert sein, wie beispielsweise die Abrasionsfestigkeit, die Härte, die Transparenz, die elastische Verformbarkeit und/oder die Elastizität.

Unter einem subtraktiven Verfahren wir ein Material-abtragendes Verfahren verstanden, wie beispielsweise und erfindungsgemäß bevorzugt ein Fräsverfahren. Ein solches Fräsverfahren kann besonders bevorzugt mit einer computergesteuerten Mehrachs-Fräse als CAM-Vorrichtung durchgeführt werden.

Das ausgehärtete Kunststoffmaterial ist vorzugsweise zumindest an der Oberfläche des dentalen Formkörpers biokompatibel.

Es kann vorgesehen sein, dass der Fräskörper vor Schritt C) und vorzugsweise nach Schritt B) in der CAM-Vorrichtung befestigt wird, insbesondere über eine Halterung des Fräskörpers.

Das Aushärten kann unter Anwendung eines Pressstempels zum Ausüben eines Drucks auf den fluiden polymerisierbaren Kunststoff erfolgen.

Bei erfindungsgemäßen Verfahren kann vorgesehen sein, dass die Negativform des Teilbereichs der Oberfläche des dentalen Formkörpers, die in Schritt A) in dem Boden des Hohlraums des Fräskörpers und in dem ersten Material des Fräskörpers hergestellt wird, mit einem Offset erzeugt wird, wobei der Offset das Volumen des virtuellen Modells des dentalen Formkörpers in einem Bereich vergrößert, in dem der dentale Formkörper nicht aus dem ersten Material bestehen soll.

Unter einem Offset für die Negativform des Teilbereichs der Oberfläche des dentalen Formkörpers ist eine Ausdehnung der Oberfläche des Formkörpers, insbesondere eine gleichmäßige Ausdehnung der Oberfläche des dentalen Formkörpers, hin zu einem größeren Volumen des dentalen Formkörpers zu verstehen. Dadurch wird erreicht, dass die bei der anschließenden subtraktiven Bearbeitung aus Richtung der Unterseite des Fräskörpers (insbesondere die okklusale Richtung des dentalen Formkörpers) entsprechend dem virtuellen Modell ohne den Offset im ausgehärteten Kunststoff erfolgen kann. Dadurch kann sichergestellt werden, dass nach der subtraktiven Bearbeitung des Fräskörpers aus Richtung der Unterseite des Fräskörpers auch an der Oberfläche des dentalen Formkörpers keine Reste des ersten Materials verbleiben und auf diese Weise das ästhetische Erscheinungsbild und/oder die physikalischen Eigenschaften des mit dem Verfahren gefertigten dentalen Formkörpers nicht negativ beeinflusst wird. Der Offset kann beispielsweise und erfindungsgemäß bevorzugt dadurch erreicht werden, dass die in Richtung der Unterseite des Fräskörpers ausgerichteten Oberflächen des virtuellen Modells des dentalen Formkörpers, die nicht aus dem ersten Material bestehen sollen, rechnerisch mit einem Abstandsvektor ergänzt werden. Der Abstandsvektor kann dabei in Richtung der Unterseite des Fräskörpers ausgerichtet sein, so dass eine parallele Verschiebung der Oberflächen des virtuellen Modells des dentalen Formkörpers, die nicht aus dem ersten Material bestehen sollen, erfolgt. Alternativ kann der Abstandsvektor auch senkrecht auf der Oberfläche des virtuellen Modells des dentalen Formkörpers angeordnet werden, so dass die betreffenden Oberflächen des virtuellen Modells gleichmäßig ausgedehnt werden. Weitere gleichwertige oder ähnliche Möglichkeiten zur Anwendung eines Abstandsvektors oder anderer Berechnungsmethoden zum Erzeugen des Offsets sind für den Fachmann ohne weiteres vorstellbar und realisierbar.

Ferner kann vorgesehen sein, dass der dentale Formkörper eine Aufbissschiene ist, wobei das erste Material eine größere Härte aufweist als das ausgehärtete Kunststoffmaterial, oder der dentale Formkörper eine Dentalprothese in Form einer dentalen Teilprothese oder Vollprothese ist, wobei die Dentalprothese eine Prothesenbasis und zumindest einen Prothesenzahn aufweist und wobei der zumindest eine Prothesenzahn aus dem ersten Material gefertigt wird und die Prothesenbasis aus dem ausgehärteten Kunststoffmaterial gefertigt wird, wobei das erste Material zahnfarben ist und das ausgehärtete Kunststoffmaterial zahnfleischfarben ist, wobei vorzugsweise das erste Material eine größere Härte und/oder Abrasionsfestigkeit aufweist als das ausgehärtete Kunststoffmaterial.

Hierdurch wird erreicht, dass die bei der Verwendung des dentalen Formkörpers besonders stark beanspruchten okklusalen Oberflächen beziehungsweise die Prothesenzähne eine größere Härte und/oder Abrasionsfestigkeit haben als die mit den Zähnen und/oder der Mundschleimhaut in Kontakt kommenden basalen Oberflächen des dentalen Formkörpers, beziehungsweise die die Prothesenzähne tragende Prothesenbasis andere für den jeweiligen Zweck geeignete physikalischen Eigenschaften aufweisen.

Als größere Härte kann insbesondere eine größere Vickers-Härte vorgesehen sein. Die Abrasionsfestigkeit kennzeichnet die Beständigkeit gegen Materialverlust (Zahnabnutzung) durch reibende Einwirkung (Zahnabrieb). Die Abrasionsfestigkeit künstlicher Zähne ist eine Untersuchung in der Zahnmedizin zum Abriebverhalten künstlicher Zähne. Das gleiche gilt auch für andere an den Okklusionsflächen eingesetzt Materialien. Verfahren zu deren Bestimmung sind dem Fachmann in der Dentaltechnik bekannt, beispielsweise aus der WO 2016/008857 A1 und den dort zitierten Quellen.

Des Weiteren kann vorgesehen sein, dass in Schritt B) wenigstens einer der zumindest einen fluiden polymerisierbaren Kunststoffe beim Einfüllen zumindest die in Schritt A) im ersten Material erzeugten Oberflächen vollflächig benetzt.

Hierdurch wird erreicht, dass eine stabile Verbindung zwischen dem ersten Material und dem ausgehärteten Kunststoffmaterial erzeugt wird.

Bevorzugt kann auch vorgesehen sein, dass in Schritt C) ein subtraktives Bearbeiten des ersten Materials und des ausgehärteten Kunststoffmaterials aus Richtung der Unterseite des Fräskörpers mit dem CAM-Verfahren nach Maßgabe der okklusalen Oberfläche des virtuellen Modells des dentalen Formkörpers erfolgt.

Auch kann vorgesehen sein, dass in Schritt C) ein subtraktives Bearbeiten des ausgehärteten Kunststoffmaterials und des ersten Materials aus Richtung der Oberseite des Fräskörpers mit dem CAM-Verfahren nach Maßgabe der basalen Oberfläche des virtuellen Modells des dentalen Formkörpers erfolgt.

Insbesondere bei der Herstellung einer dentalen Teil- oder Vollprothese ist es zweckmäßig, in Schritt C) neben dem okklusalen subtraktiven Bearbeiten des ersten Materials auch das ausgehärtete Kunststoffmaterials aus Richtung der Unterseite des Fräskörpers mit dem CAM-Verfahren okklusal zu bearbeiten, damit die Prothesenbasis der dentalen Teil- oder Vollprothese zumindest an den sichtbaren Oberflächen oder den gesamten okklusalen Obernflächen aus dem ausgehärteten Kunststoffmaterial besteht und somit zahnfleischfarben ist und keine zahnfarbenen Stellen aufweist, die das ästhetische Erscheinungsbild der dentalen Teil- oder Vollprothese stören könnten.

An der Auflagefläche auf dem zahnlosen Kiefer beziehungsweise auf der Mundschleimhaut kann theoretisch auch das zahnfarbene erste Material sichtbar sein.

Auch für andere dentale Formkörper kann eine Bearbeitung des ausgehärteten Kunststoffmaterials von der Unterseite des Fräskörpers (der okklusalen Richtung) und des ersten Materials von der Oberseite des Fräskörpers (der basalen Richtung) aus sinnvoll sein.

Ferner kann vorgesehen sein, dass in Schritt A) an der den Hohlraum des Fräskörpers begrenzenden Innenseite der umlaufenden Wandung wenigstens eine Markierung angebracht wird, insbesondere die wenigstens eine Markierung durch das subtraktive CAM-Verfahren in der Innenseite der umlaufenden Wandung erzeugt wird, wobei der Abstand der wenigstens einen Markierung vom Boden des Hohlraums nach Maßgabe des virtuellen Modells des dentalen Formkörpers bestimmt wird, wobei bevorzugt die wenigstens eine Markierung wenigstens ein Eichstrich ist, wobei in Schritt B) der zumindest eine fluide polymerisierbare Kunststoff bis zur Höhe der wenigstens eine Markierung in der Hohlraum gefüllt wird.

Hierdurch kann Material des zumindest einen fluiden Kunststoffs eingespart werden, es entstehen weniger Abfälle und das anschließende subtraktive Bearbeiten des ausgehärteten Kunststoffmaterials von der Oberseite des Fräskörpers kann schneller durchgeführt werden, wobei die hierfür verwendeten Werkzeuge der CAM-Vorrichtung geschont werden.

Dabei kann vorgesehen sein, dass die wenigstens eine Markierung im Bereich zumindest einer bereits vorher vorhandenen Markierung wie zumindest einer Skala an der Innenseite der umlaufenden Wandung erzeugt wird. Anhand dieser Markierung oder Skala kann der Anwender dann gegebenenfalls die Menge des einzufüllenden Volumens abschätzen. Dies gelingt insbesondere dann, wenn der Anwender das in Schritt A) aus dem ersten Material entfernte Volumen kennt, beziehungsweise dieses dem Anwender auf einer Anzeige angezeigt wird. Dieses Volumen lässt sich leicht anhand des virtuellen Modells des dentalen Formkörpers abzüglich des aus dem ersten Material zu fertigenden Teils, gegebenenfalls zuzüglich des Offsets, und aus der Lage der Negativform in dem ersten Material berechnen.

Es kann vorgesehen sein, dass vor Schritt A) oder vor Schritt B) und nach Schritt A) ein Ringkörper oder ein Rohrstück an dem Vollkörper befestigt wird, so dass der Ringkörper oder das Rohrstück die umlaufende Wandung bildet, wobei bevorzugt der Ringkörper oder das Rohrstück nach Schritt B) und vor Schritt C) wieder entfernt wird.

Hierdurch kann ein zum weiteren Verfahren passender Ringkörper oder passendes Rohrstück verwendet werden. Zudem kann so ein besonders einfacher Aufbau für den Fräskörper gewählt werden. Es kann vorgesehen sein, dass der Ringkörper oder das Rohrstück an den Vollkörper geklebt wird, wobei der Klebstoff umlaufend und/oder vollflächig auf die Verbindungsoberfläche aufgetragen wird, so dass der Ringkörper oder das Rohrstück flüssigkeitsdicht mit dem Vollkörper verbunden wird. Dadurch wir verhindert, dass der fluide polymerisierbare Kunststoff in Schritt B) aus dem Hohlraum ausfließen kann.

Des Weiteren kann vorgesehen sein, dass vor Schritt C) eine Nullpunktverschiebung zum Festlegen der in Schritt B) erzeugten Ebene der Oberfläche des ausgehärteten Kunststoffmaterials berechnet wird, wobei in Schritt C) die Nullpunktverschiebung dahingehend berücksichtigt wird, dass das subtraktive Bearbeiten in der Ebene der Oberfläche des ausgehärteten Kunststoffmaterials beginnt.

Hierdurch kann das Verfahren verkürzt werden, da das Werkzeug zum Durchführen der subtraktiven Bearbeitung nicht im leeren Raum geführt wird, sondern in den Bereichen - oder zumindest in deren unmittelbarer Nähe - beginnt, in denen das ausgehärtete Kunststoffmaterial vorhanden ist.

Ferner kann vorgesehen sein, dass in Schritt C) zumindest einmal die Position und Lage des in der CAM-Vorrichtung befestigten Fräskörpers anhand zumindest einer Markierung am Fräskörper bestimmt wird und die Position und Lage des Fräskörpers beim Steuern der CAM-Vorrichtung berücksichtigt wird, wobei vorzugsweise die Bestimmung der Position und Lage des in der CAM-Vorrichtung befestigten Fräskörpers vollautomatisch bestimmt wird.

Hierdurch wird sichergestellt, dass der dentale Formkörper in der gewünschten Weise aus dem Fräskörper und dem ausgehärteten Kunststoffmaterial herausgearbeitet wird. Das ist insbesondere dann wichtig und hilfreich, wenn der Fräskörper während des Schritts C) neu in der CAM-Vorrichtung befestigt wird.

Bevorzugt kann auch vorgesehen sein, dass nach Schritt A) und vor Schritt B) ein Schritt A2) erfolgt:
A2) Reinigen und/oder Vorbehandeln der Verbindungsoberfläche oder der Verbindungsoberfläche und der Negativform oder der gesamten frei zugänglichen Oberfläche des ersten Materials am Boden des Hohlraums einschließlich der Verbindungsoberfläche und der Negativform, wobei bevorzugt beim Vorbehandeln eine chemische Behandlung der Oberfläche des ersten Materials erfolgt, besonders bevorzugt ein chemisches Anquellen der Oberfläche des ersten Materials mit einer Monomerflüssigkeit, wobei das erste Material eine Kunststoffzusammensetzung enthaltend ein Polymethylmethacrylat (PMMA) oder bestehend aus einem PMMA ist.

Hierdurch wird eine besonders stabile Verbindung zwischen dem ersten Material und dem ausgehärteten Kunststoffmaterial erzeugt.

Weiterhin kann vorgesehen sein, dass das Einfüllen zumindest eines fluiden polymerisierbaren Kunststoffs in Schritt B) durch Stopfen erfolgt und/oder mit einem Überdruck durchgeführt wird, insbesondere in einem Drucktopf oder in einem Druckraum mit einem Druck über Normaldruck, bevorzugt mit einem Druck von mindestens 150 kPa, besonders bevorzugt mit einem Druck von mindestens 200 kPa, ganz besonders bevorzugt mit einem Druck von mindestens 200 kPa und höchstens 400 kPa.

Hierdurch können Lufteinschlüsse zwischen dem ersten Material und dem eingefüllten fluiden polymerisierbaren Kunststoff ausgetrieben und so Schwachstellen oder Oberflächenschäden im dentalen Formkörper vermieden beziehungsweise reduziert werden. Hierzu kann beispielsweise eine "Palamat Elite" Druck-Polymerisationseinheit verwendet werden. Des Weiteren können beim Stopfen oder dem Anwenden eines Überdrucks beim Einfüllen des zumindest einen fluiden polymerisierbaren Kunststoffs in Schritt B) Siedeblasen vermieden werden, wie sie beispielsweise bei MMA-basierten Kunststoffen auftreten.

Es kann vorgesehen sein, dass das Einfüllen zumindest eines fluiden polymerisierbaren Kunststoffs in Schritt B) durch Stopfen erfolgt und/oder mit einem Überdruck durchgeführt wird, insbesondere in einem Drucktopf oder in einem Druckraum mit einem Druck von maximal 1.000 kPa, bevorzugt mit einem Druck von maximal 500 kPa, besonders bevorzugt mit einem Druck von maximal 400 kPa.

Es kann auch vorgesehen sein, dass das Einfüllen zumindest eines fluiden polymerisierbaren Kunststoffs in Schritt B) durch Stopfen erfolgt und/oder mit einem Überdruck durchgeführt wird, bevorzugt mit einem Druck von mindestens 100 kPa und maximal 1.000 kPa, besonders bevorzugt mit einem Druck von mindestens 150 kPa und maximal 500 kPa, ganz besonders bevorzugt mit einem Druck von mindestens 200 kPa und maximal 400 kPa.

Auch kann vorgesehen sein, dass das Aushärten des fluiden polymerisierbaren Kunststoffs in Schritt B) durch Einwirken von Wärme und/oder Druck erfolgt, wobei bevorzugt das Aushärten über einen Zeitraum zwischen 10 Minuten und 120 Minuten erfolgt, besonders bevorzugt zwischen 30 Minuten und 60 Minuten.

Hierdurch kann eine gute Festigkeit des ausgehärteten Kunststoffmaterials erreicht werden. Als das ausgehärtete Kunststoffmaterial, das aus dem fluiden polymerisierbaren Kunststoff hergestellt wird, wird bevorzugt ein Heiß-Polymerisat oder ein Kalt-Polymerisat verwendet, beziehungsweise als der fluide polymerisierbare Kunststoff die Ausgangskomponenten eines Heiß-Polymerisats oder eines Kalt-Polymerisats. Hierdurch ist das ausgehärtete Kunststoffmaterial beziehungsweise der dentale Formkörper auch für Allergiker geeignet. Daher eignet sich auch für das erste Material ein Heiß-Polymerisat oder ein Kalt-Polymerisat, dass aber vorzugsweise bereits endgehärtet ist.

Die der vorliegenden Erfindung zugrundeliegenden Aufgaben werden auch gelöst durch einen dentalen Formkörper, insbesondere Dentalprothese oder Aufbissschiene, hergestellt mit einem oben beschriebenen Verfahren.

Der Erfindung liegt die überraschende Erkenntnis zugrunde, dass es durch das Vorsehen und Verwenden eines Hohlraums zum Einfüllen eines fluiden polymerisierbaren Kunststoffs als zweites Material auf einer Oberseite eines Fräskörpers zur Herstellung eines dentalen Formkörpers gelingt, die Menge des ersten Materials, das subtraktiv ausgefräst beziehungsweise entfernt werden muss, zu reduzieren, indem die Lage der okklusalen Seite des dentalen Formkörpers bei der CAD-Berechnung des zugehörigen CAM-Verfahren geschickt gewählt wird. Es reicht dann nämlich aus, die basale Oberfläche der abriebfesteren Prothesenzähne oder des okklusalen Teils des dentalen Formkörpers in den Bereich des Bodens des Hohlraums zu legen. Der leichter und einfacher fräsbare Kunststoff zur Herstellung der Prothesenbasis beziehungsweise des basalen Teils kann dann einfach in den erzeugten Hohlraum gefüllt werden und muss dabei auch nur bis zur gewünschten Höhe in den Hohlraum gefüllt werden, so dass es auch hier zu einer Materialersparnis des zweiten Kunststoffmaterials kommt. Jede Materialersparnis führt dabei automatisch zu einer Zeiteinsparung und zum schonen der verwendeten Werkzeuge, insbesondere dann, wenn besonders abrasionsfeste Materialien bearbeitet werden sollen.

Durch die vorliegende Erfindung, insbesondere durch den Fräskörper, das Set und das erfindungsgemäße Verfahren wird eine hohe Passgenauigkeit des dentalen Formkörpers durch direktes Fräsen der finalen Formgebung erreicht. Es entsteht kein Aufwand bei einem Verkleben von Prothesenzähnen und es entstehen im dentalen Formkörper keine Inhomogenitäten durch einen Fügeprozess. Gleichzeitig kann durch vollständiges Aushärten des Vollkörpers aus dem ersten Material ein besonders abrasionsfestes Material für Prothesenzähne und durch Verwenden eines geschichteten ersten Materials ein besonders ästhetisch ansprechendes Prothesenzahnmaterial gewonnen werden. Bei Dentalprothesen ergibt sich ein natürlicher Farbübergang zahnfleischfarben-zahnfarben an den richtigen Stellen und es muss hierbei kein Kompromiss eingegangen werden. Eine besonders hohe Ästhetik kann dabei durch die Verwendung von Multilayer-Frässcheiben als zahnfarbener Vollkörper erreicht werden.

Die Herstellung aus dem erfindungsgemäßen Fräskörper und mit dem erfindungsgemäßen Verfahren kann in einem lediglich zweistufigen Herstellungsprozess erfolgen. Es kann also ein zweistufiges Verfahren zur Herstellung der dentalen Formkörper verwendet werden. Des Weiteren sind keine unterschiedlichen Formvarianten an Rohlingen beziehungsweise Fräskörpern notwendig. Es kann aber auch ein sehr geringer Satz unterschiedlich großer Fräsrohlinge verwendet werden beziehungsweise vorteilhaft sein.

Der Hohlraum des Fräskörpers ermöglicht einen reduzierten Fräsaufwand mit geringerem notwendigen Materialabtrag und Werkzeugverschleiß beziehungsweise Fräsverschleiß. Der Anwender kann den Farbton des fluiden polymerisierbaren Kunststoffs selber bestimmen und ändern, zum Beispiel eine geaderte Optik wählen beziehungsweise erzeugen. Die innenliegende Füllmengenmarkierung, die bereits vorhanden sein kann oder die im ersten Fräsvorgang erzeugt werden kann, ermöglicht ein prozesssicheres Befüllen vor dem zweiten Fräsvorgang.

Ein beispielhaftes erfindungsgemäßes Verfahren zur Herstellung einer Dentalprothese (dentalen Vollprothese oder dentale Teilprothese als dentaler Formkörper) kann den folgenden Ablauf aufweisen:
1. Digitales Design der prothetischen Arbeit und Separierung in mehrere Datensegmente. Benötigt werden Daten zur okklusalen beziehungsweise oralen Oberseite, basalen Unterseite der Dentalprothese sowie Zwischenflächendaten bestehend aus basaler Fläche der zahnfarbenen Anteile und Oberseite (oraler Seite) der zahnfleischfarbenen Anteile als Verbindungsoberfläche. Bei der Erstellung der Daten zur okklusalen beziehungsweise oralen Oberseite ist gegebenenfalls im CAD ein zusätzlicher Offset auf die zahnfleischfarbenen Anteile vorzusehen.
2. Entwicklung einer geeigneten Frässtrategie zur Verarbeitung der einzelnen Prozessschritte. Benötigt wird eine einseitige Bearbeitung der Unterseite, sowie eine Nullpunktverschiebung passend zu dem verwendeten Fräskörper sowie vorzugsweise eine weitere Nullpunktverschiebung für die Bearbeitung beider Seiten mit entsprechender Nullpunktverschiebung für Ober- und Unterseite getrennt voneinander.
3. Befestigen eines in der Größe mindestens den zahnfarbenen Anteilen entsprechenden Fräskörpers oder eines zahnfarbenem Vollkörpers des Fräskörpers in der Fräsmaschine und fräsen der Zwischenflächendaten und der Daten zur okklusalen beziehungsweise oralen Oberseite der Prothesenbasis von basal, gegebenenfalls mit leichtem Offset der zahnfleischfarbenen Anteile (der Prothesenbasis) in oraler Richtung. Der Fräskörper oder der zahnfarbene Vollkörper kann vorzugsweise vor der Positionierung mit einer Positionsmarkierung versehen werden, die eine Repositionierung ermöglicht.
4. Entnahme des teilgefrästen Rohlings und optional Aufsetzen eines zylindrischen Ringkörpers als umlaufende Wandung des Fräskörpers zum Herstellen des Hohlraums an der Oberseite zum einfacheren Auffüllen der ausgefrästen Bereiche und notwendiger zusätzlicher Volumina, sofern der Fräskörper nicht bereits einen durch die umlaufende Wandung begrenzten Hohlraum auf der Oberseite aufweist, wobei die umlaufende Wandung dabei vorzugsweise einteilig mit dem Vollkörper des Fräskörpers ausgeführt ist.
5. Auffüllen oder teilweises Befüllen des Hohlraums mit einem Prothesenwerkstoff in Form eines fluiden polymerisierbaren Kunststoffs (bevorzugt mit einem Pulver-Flüssigkeitssystem) und Polymerisation im analogen Fertigungsverfahren. Danach gegebenenfalls Entfernen des Stützrings und gegebenenfalls notwendige Nachbehandlung des ausgehärteten Kunststoffmaterials, wie zum Beispiel durch eine Wasserlagerung.
6. Repositionieren des aufgefüllten teilgefrästen Rohlings in der Fräsmaschine und Fräsen der Außengeometrien basal und oral gemäß dem finalen Prothesendesign.

Wird gleich ein Fräskörper mit zahnfarbenen Vollkörper und mit einseitig ausgeführter Hohlform zur Verringerung des Fräsaufwands verwendet, kann das unter Punkt 4. genannte Anbringen eines zylindrischen Ringkörpers entfallen.

Innerhalb der Hohlform kann während des Schrittes 3. eine Füllmarke oder andere geeignete Indizierung angebracht werden, um eine ausreichende aber nicht übermäßige spätere Befüllung mit dem fluiden polymerisierbaren Kunststoff durch den Anwender in Schritt 5. überprüfbar sicherzustellen.

Als Abschluss des Verfahrens kann eine Oberflächenvergütung durch Politur und/oder chemische Behandlung der Dentalprothese erfolgen.

Im Folgenden werden Ausführungsbeispiele der Erfindung anhand von elf schematisch dargestellten Figuren erläutert, ohne jedoch dabei die Erfindung zu beschränken. Dabei zeigt:
Figur 1: eine schematische perspektivische Ansicht auf eine Oberseite eines ersten erfindungsgemäßen Fräskörpers;
Figur 2: eine schematische perspektivische transparente Ansicht auf eine seitliche Seite eines zweiten erfindungsgemäßen Fräskörpers;
Figur 3: eine schematische perspektivische Ansicht auf eine okklusale Seite einer Dentalprothese hergestellt mit einem erfindungsgemäßen Verfahren mit Hilfe eines erfindungsgemäßen Fräskörpers;
Figur 4: eine schematische seitliche Ansicht auf den Fräskörper nach Figur 2 mit einer Querschnittansicht und einer Lage der damit herzustellenden Dentalprothese nach Figur 3;
Figur 5: eine schematische seitliche Ansicht auf den Fräskörper nach den Figuren 2 und 4 mit einer Querschnittansicht in einer anderen Schnittebene und mit der Lage der damit herzustellenden Dentalprothese nach Figur 3;
Figur 6: eine schematische perspektivische Ansicht der Lage der Dentalprothese nach Figur 3 in dem Fräskörper nach den Figuren 2, 4 und 5;
Figur 7: eine schematische perspektivische Ansicht auf die Oberseite des Fräskörpers nach den Figuren 2 und 4 bis 6 mit den aus dem Boden des Hohlraums überstehenden basalen Anteilen der Prothesenbasis der Dentalprothese nach Figur 3;
Figur 8: eine schematische seitliche Ansicht auf den Fräskörper nach den Figuren 2 und 4 bis 7 mit einer Querschnittansicht und der Lage der okklusalen Oberflächen der damit herzustellenden Dentalprothese nach Figur 3;
Figur 9: eine schematische Ansicht auf die Oberseite des Fräskörpers nach den Figuren 2 und 4 bis 8 nach dem subtraktiven Herausarbeiten der Verbindungsoberfläche und der Negativform für die orale Seite der Prothesenbasis;
Figur 10: eine schematische Ansicht auf die basale Seite der Dentalprothese nach dem subtraktiven Herausarbeiten aus dem zuvor eingefüllten und dann ausgehärteten Kunststoffmaterial; und
Figur 11: eine schematische Ansicht auf die okklusale beziehungsweise orale Seite der Dentalprothese nach dem subtraktiven Herausarbeiten aus dem ersten Material und dem zuvor eingefüllten polymerisierten ausgehärteten Kunststoffmaterial.

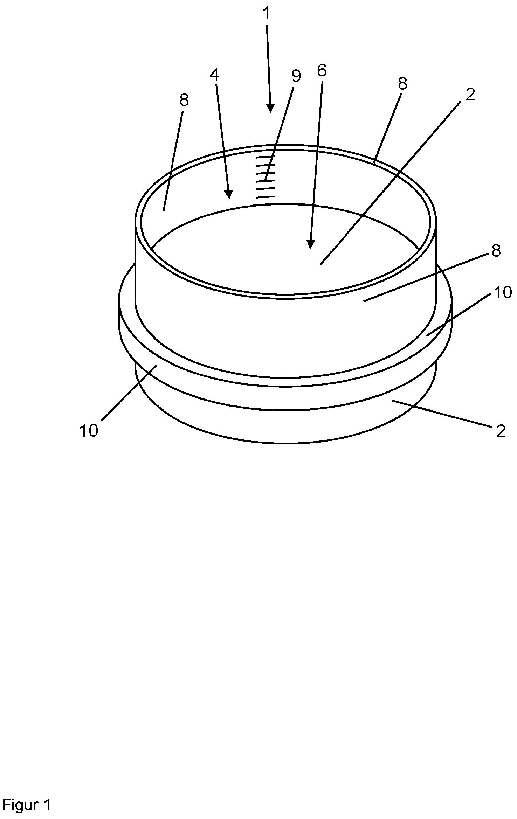

Figur 1 zeigt eine schematische perspektivische Ansicht auf eine Oberseite (in Figur 1 oben) eines ersten erfindungsgemäßen Fräskörpers 1. Der Fräskörper 1 weist einen Vollkörper 2 aus einem ersten Material auf. Der Vollkörper 2 erstreckt sich bis zu einer der Oberseite des Fräskörpers 1 gegenüberliegenden Unterseite (in Figur 1 nicht zu sehen). Das erste Material kann ein vollständig polymerisierter zahnfarbener Kunststoff sein, der zur Herstellung von Prothesenzähnen geeignet ist und hierfür die notwendige Abrasionsfestigkeit aufweist. Das erste Material sollte vorzugsweise bereits so, wie es in dem Fräskörper 1 vorliegt, biokompatibel sein, um für Anwendungen im Mundraum eines Patienten geeignet zu sein.

Auf der Oberseite des Fräskörpers 1 ist ein Hohlraum 4 mit einem Boden 6 angeordnet, wobei der Hohlraum 4 seitlich von einer umlaufenden Wandung 8 begrenzt ist. Der Boden 6 wird (vorzugsweise vollständig) durch den Vollkörper 2 gebildet. Die umlaufende Wandung 8 kann aus dem ersten Material bestehen oder aus einem anderen Material bestehen. Insbesondere kann die umlaufende Wandung 8 ein Ringkörper oder ein Rohrstück sein, das auf den Vollkörper 2 gesteckt und dort mit diesem fest verbunden ist. Die Verbindung kann durch Kleben erfolgen. Der Vollkörper 2 kann zylindrisch geformt sein. Der Vollkörper 2 kann zum Aufstecken eines Ringkörpers oder Rohrstücks als umlaufende Wandung 8 eine Stufe am Außenumfang aufweisen, auf die der Ringkörper oder das Rohrstück flächenbündig aufgesteckt ist. Die umlaufende Wandung 8 kann insbesondere ein zylindrisches Rohrstück sein. Die umlaufende Wandung 8 kann auch ein Metallringkörper sein.

An einer dem Hohlraum 4 zugewandten Innenseite der umlaufenden Wandung 8 kann eine Markierung 9 zum Bestimmen eines Füllstands in dem Hohlraum 4 angeordnet sein. Die Markierung 9 kann aber auch erst im Laufe eines Verfahrens zur Herstellung eines dentalen Formkörpers an der umlaufenden Wandung 8 angebracht werden, beispielsweise eingefräst werden. Anhand der Markierung 9 kann der in den Hohlraum 4 einzufüllende fluide polymerisierbare Kunststoff (in Figur 1 nicht gezeigt) bis zur richtigen Höhe eingefüllt werden.

An wenigstens einer Außenwandung des Fräskörpers 1 kann zumindest eine Halterung 10 zur Fixierung des Fräskörpers 1 in einer CAM-Vorrichtung angeordnet sein. Die Halterung 10 kann aus der Außenwand des Fräskörpers 1 als aufgesetzter Torus mit rechteckiger Querschnittsfläche vorstehen. Alternativ zu der in Figur 1 gezeigten Halterung 10 kann die Halterung auch in anderer Weise realisiert werden, beispielsweise durch vorstehende Vorsprünge oder durch Vertiefungen in den Seitenflächen. Die Halterung 10 dient zur Befestigung in einer CAM-Vorrichtung (nicht gezeigt).

Der Fräskörper 1 nach Figur 1 kann bei einem erfindungsgemäßen Verfahren wie folgt eingesetzt werden. Der Fräskörper 1 wird in einer subtraktiven CAM-Vorrichtung, wie einer computergesteuerten Mehrachsfräse, mit Hilfe der Halterung 10 fixiert. Mit Hilfe eines virtuellen CAD-Modells eines zu erzeugenden dentalen Formkörpers wird in dem Boden 6 eine Oberfläche erzeugt, die der Verbindungsoberfläche zwischen dem ersten Material und dem aus dem fluiden polymerisierbaren Kunststoff herzustellenden ausgehärteten Kunststoffmaterial nach Maßgabe des virtuellen CAD-Modells entspricht. Zudem werden die okklusalen beziehungsweise oralen Oberflächen der aus dem ausgehärteten Kunststoffmaterial bestehenden Oberflächen mit der subtraktiven CAM-Vorrichtung als Negativform aus dem Vollkörper 2 herausgearbeitet. Dabei kann ein Offset verwendet werden, so dass die Negativform etwas tiefer, bevorzugt zumindest einige zehntel Millimeter tiefer in den Vollkörper 2 hineingearbeitet wird, als es die okklusale beziehungsweise orale Oberfläche für das ausgehärtete Kunststoffmaterial gemäß dem CAD-Modell bei einer direkten Negativform erfordern würde. Zusätzlich kann die Markierung 9 erst in diesem Schritt an der umlaufenden Wandung 8 erzeugt werden. Anschließend kann die so neu erzeugte Oberfläche im Boden 6 des Vollkörpers 2 gereinigt werden.

Danach kann der fluide polymerisierbare Kunststoff (nicht gezeigt) in den Hohlraum 4 eingefüllt werden und zwar bis zu einer Höhe, die ausreicht, damit der aus dem ausgehärteten Kunststoffmaterial bestehende Teil des dentalen Formkörpers entsprechend dem virtuellen CAD-Modell auf der basalen Seite vollständig aus dem ausgehärteten Kunststoffmaterial herausgearbeitet werden kann. Der fluide polymerisierbare Kunststoff kann unter Druck- und Temperatur-Einwirkung aushärten und bildet das ausgehärtete Kunststoffmaterial. Anschließend kann das Zwischenprodukt wieder in der subtraktiven CAM-Vorrichtung befestigt werden und der dentale Formkörper wird mit Hilfe der CAM-Vorrichtung anhand der okklusalen beziehungsweise oralen Oberflächen und der basalen Oberflächen des virtuellen CAD-Modells des dentalen Formkörpers herausgearbeitet. Ein erster Teil des dentalen Formkörpers (beispielsweise Prothesenzähne) besteht dann aus dem ersten Material des Formkörpers und ein zweiter Teil des dentalen Formkörpers (beispielsweise eine Prothesenbasis) besteht dann aus dem ausgehärteten Kunststoffmaterial.

Alternativ zu einer Dentalprothese kann mit dem Verfahren auf gleiche Weise eine Aufbissschiene hergestellt werden, deren okklusale Oberflächen aus dem ersten Material bestehen und deren an den Zähnen eines Patienten anliegenden basalen Oberflächen aus dem ausgehärteten Kunststoffmaterial bestehen. Dies kann genutzt werden, um geeignete Materialeigenschaften zu kombinieren und/oder ästhetisch ansprechende Farbverläufe zu generieren.

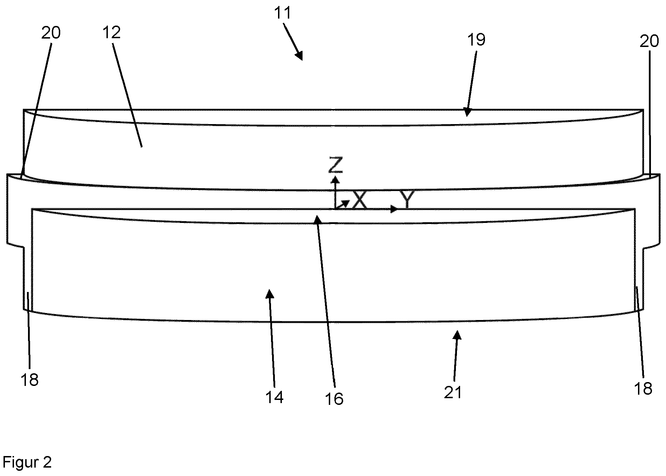

Figur 2 zeigt eine schematische perspektivische transparente und seitliche Ansicht eines zweiten erfindungsgemäßen Fräskörpers 11. Der Fräskörper 11 weist einen Vollkörper 12 aus einem ersten Material auf. Der Vollkörper 12 erstreckt sich bis zu einer Unterseite 19, die einer Oberseite 21 des Fräskörpers 11 gegenüberliegend angeordnet ist. Das erste Material kann ein vollständig polymerisierter zahnfarbener Kunststoff sein, der zur Herstellung von Prothesenzähnen geeignet ist und hierfür die notwendige Abrasionsfestigkeit aufweist. Das erste Material sollte bereits so, wie es in dem Fräskörper 1 vorliegt, biokompatibel sein, um für Anwendungen im Mundraum eines Patienten geeignet zu sein.

An der Oberseite 21 des Fräskörpers 11 ist ein Hohlraum 14 mit einem Boden 16 angeordnet, wobei der Hohlraum 14 seitlich von einer umlaufenden Wandung 18 begrenzt ist. Der Boden 16 wird vorzugsweise vollständig durch den Vollkörper 12 gebildet. Die umlaufende Wandung 18 kann aus dem ersten Material bestehen oder aus einem anderen Material bestehen. Insbesondere kann die umlaufende Wandung 18 ein Ringkörper oder ein Rohrstück sein, das auf den Vollkörper 12 gesteckt und dort mit dem Vollkörper 12 fest verbunden ist. Die Verbindung kann durch Kleben erfolgen. Der Vollkörper 12 kann zylindrisch geformt sein. Die umlaufende Wandung 18 kann ein zylindrisches Rohrstück sein. Die umlaufende Wandung 18 kann auch ein Metallringkörper sein.

An einer dem Hohlraum 14 zugewandten Innenseite der umlaufenden Wandung 18 kann eine Markierung (in Figur 2 nicht zu sehen) zum Bestimmen eines Füllstands in dem Hohlraum 14 angeordnet sein. Die Markierung kann aber auch erst im Laufe eines erfindungsgemäßen Verfahrens an der umlaufenden Wandung 18 angebracht werden, beispielsweise eingefräst werden. Anhand der Markierung kann der in den Hohlraum 14 einzufüllende fluide polymerisierbare Kunststoff (in Figur 2 nicht gezeigt) bis zur richtigen Höhe eingefüllt werden.

An wenigstens einer Außenwandung des Fräskörpers 11 kann zumindest eine Halterung 20 zur Fixierung des Fräskörpers 11 in einer CAM-Vorrichtung angeordnet sein. Die Halterung 20 kann aus der Außenwand des Fräskörpers 1 vorstehen. Die Halterung 20 kann durch einen vorstehenden umlaufenden Ring gebildet sein.

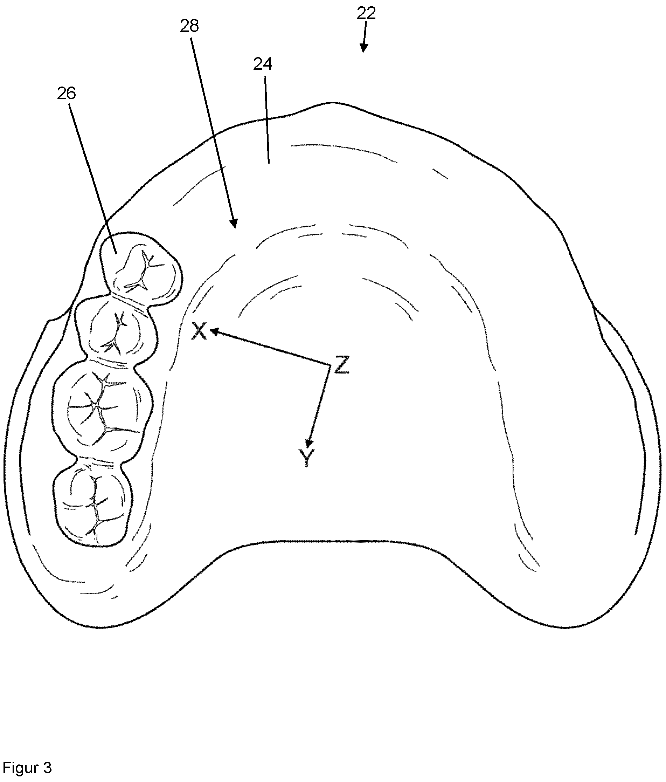

Figur 3 zeigt eine schematische perspektivische Ansicht auf eine Dentalprothese 22 hergestellt mit einem erfindungsgemäßen Verfahren mit Hilfe eines erfindungsgemäßen Fräskörpers 1, 11. Die Dentalprothese 22 weist eine Prothesenbasis 24 aus einem zahnfleischfarbenen ausgehärteten Kunststoffmaterial auf. Mehrere Prothesenzähne 26 können als einteilige Zahnreihe mit der Prothesenbasis 24 verbunden sein. Die Prothesenzähne 26 bestehen aus dem ersten Material und sind zahnfarben, vorzugsweise farblich geschichtet strukturiert, um ein besonders gutes ästhetisches Aussehen zu gewährleisten. Die Prothesenzähne 26 und die Prothesenbasis 24 sind unmittelbar miteinander verbunden, wenn sie mit einem erfindungsgemäßen Verfahren hergestellt wurden. In Figur 3 ist die okklusale beziehungsweise die orale Oberfläche 28 der Dentalprothese 22 zu erkennen. Die Dentalprothese 22 wird mit Hilfe eines virtuellen CAD-Modells erzeugt, das zuvor in bekannter Weise anhand von Patientendaten und gegebenenfalls weiterer Bearbeitung konstruiert wurde, wobei das virtuelle CAD-Modell zur Umsetzung eines erfindungsgemäßen Verfahrens rechnerisch in einen zahnfarbenen Teil für die Prothesenzähne 26 und einen zahnfleischfarbenen Teil für die Prothesenbasis 24 getrennt wird. Neben den Daten zur okklusalen beziehungsweise oralen Oberfläche 28 der Dentalprothese 22 umfasst das virtuelle CAD-Modell die Daten zur der der okklusalen beziehungsweise oralen Oberfläche 28 gegenüberliegenden basalen Seite der Dentalprothese 22 (in Figur 3 nicht zu sehen) sowie die Daten zur Verbindungsoberfläche zwischen den Prothesenzähnen 26 und der Prothesenbasis 24 auf. Die Verbindungsoberfläche liegt dabei vorzugsweise innerhalb der Dentalprothese 22. Das in Figur 3 gezeigte Bild entspricht also auch der äußeren Form des virtuellen CAD-Modells.

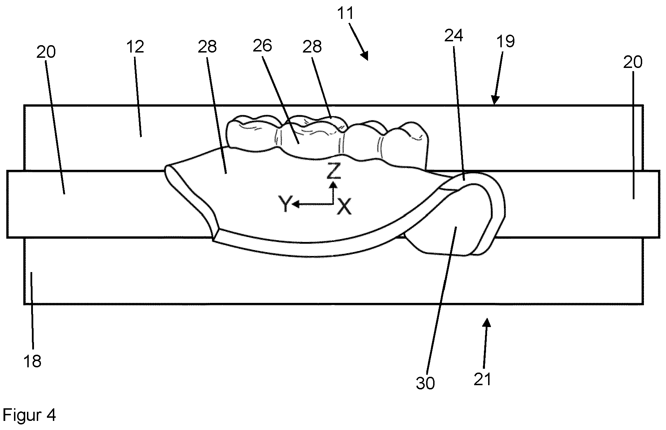

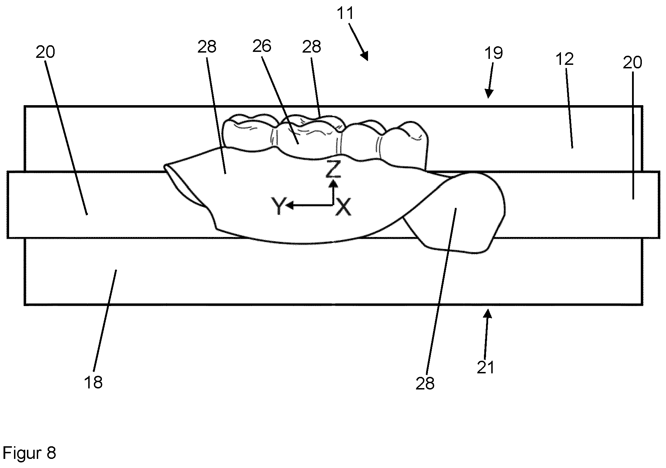

Mit den Figuren 4 bis 10 wird im Folgenden beispielhaft der Ablauf eines erfindungsgemäßen Verfahrens unter Anwendung des Fräskörpers 11 nach Figur 2 und des virtuellen CAD-Modells der Dentalprothese 22 nach Figur 3 erläutert.

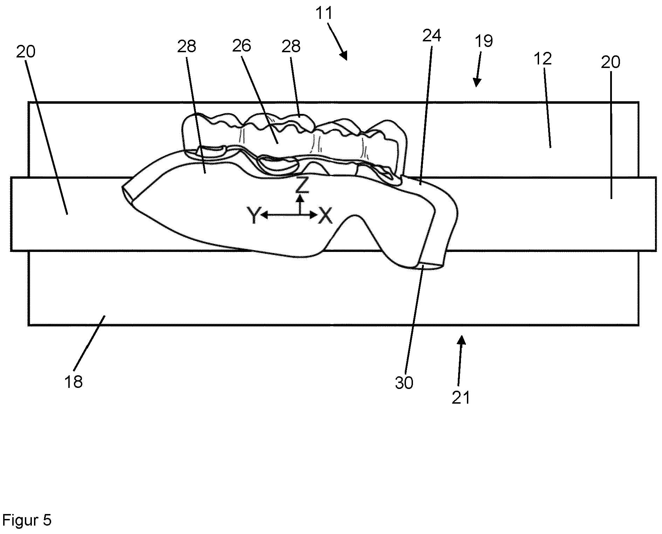

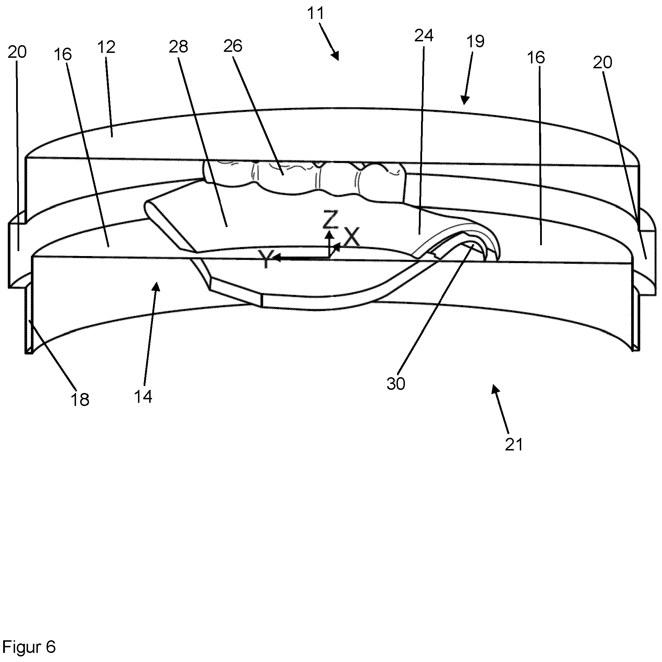

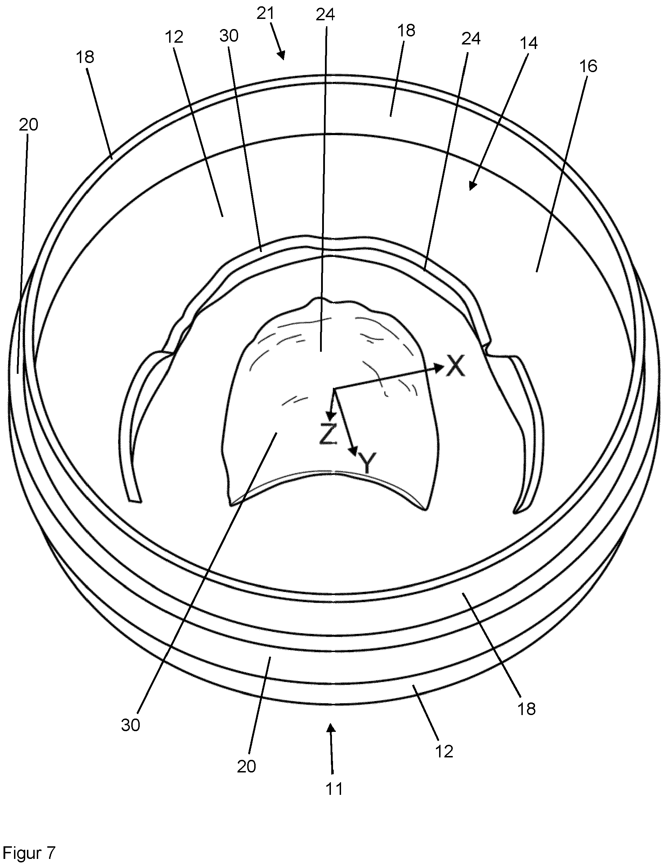

Hierzu zeigt Figur 4 eine schematische seitliche Ansicht auf den Fräskörper 11 nach Figur 2 mit einer Querschnittansicht und Lage der damit herzustellenden Dentalprothese 22 nach Figur 3. Das virtuelle CAD-Modell der Dentalprothese 22 ist also in der gewünschten Lage in dem Fräskörper 11 über den Fräskörper 11 oder in den Fräskörper 11 eingezeichnet. Dies dient, wie auch bei einigen der folgenden Figuren dazu, dass man sich vorstellen kann, wie die herzustellende Dentalprothese 22 in dem Fräskörper 11 liegt, bevor sie herausgearbeitet wurde. Die Prothesenzähne 26 werden dabei derart in dem Fräskörpers 11 positioniert, dass sie vollständig in dem Bereich des Vollkörpers 12 aus dem ersten Material enthalten sind. Dies ist in einer in Figur 5 dargestellten Querschnittansicht etwas besser zu erkennen als in Figur 4, da dort das virtuelle CAD-Modell der Dentalprothese 22 durch die Prothesenzähne 26 geschnitten dargestellt ist. Eine basale Oberfläche 30 des virtuellen CAD-Modells der Dentalprothese 22 wird dagegen teilweise in dem Hohlraum 14 angeordnet, der später mit dem fluiden polymerisierbaren Kunststoff gefüllt wird. Dies ist etwas besser in der perspektivischen Darstellung der Figur 6 und vor allem in der schematischen perspektivischen Ansicht auf die Oberseite des Fräskörpers 11 nach Figur 7 zu erkennen, in der die aus dem Boden 16 des Hohlraums 14 überstehenden basalen Anteile der Prothesenbasis 24 der Dentalprothese 22 zu erkennen sind.

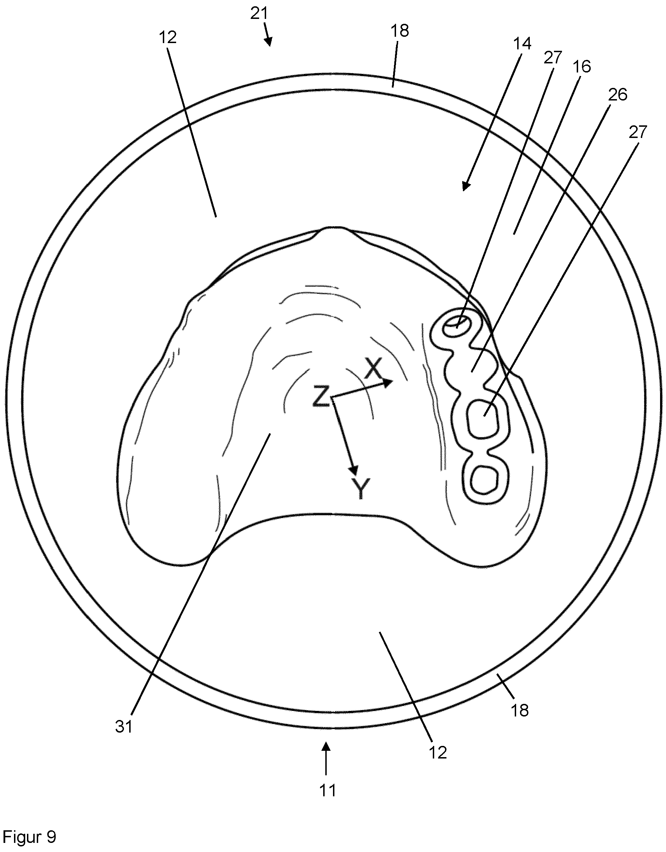

Zunächst wird die okklusale beziehungsweise orale Oberfläche 28 der Prothesenbasis 24 und die Verbindungsoberfläche zwischen den Prothesenzähnen 26 und der Prothesenbasis 24 mit einer subtraktiven CAM-Vorrichtung, wie einer computergesteuerten Mehrachsfräse, anhand des virtuellen CAD-Modells in dem Vollkörper 12 des Fräskörpers 11 erzeugt. Hierzu wird mit Hilfe des virtuellen CAD-Modells in dem Boden 16 eine Oberfläche erzeugt, die der Verbindungsoberfläche zwischen dem ersten Material und dem aus dem fluiden polymerisierbaren Kunststoff herzustellenden ausgehärteten Kunststoffmaterial nach Maßgabe des virtuellen CAD-Modells entspricht. Zudem werden die okklusalen beziehungsweise oralen Oberflächen 28 der aus dem ausgehärteten Kunststoffmaterial bestehenden Oberflächen mit der subtraktiven CAM-Vorrichtung als Negativform 31 aus dem Vollkörper 12 herausgearbeitet. Dabei kann ein Offset verwendet werden, so dass die Negativform 31 zumindest einige zehntel Millimeter tiefer in den Vollkörper 12 hineingearbeitet wird, als es die okklusale beziehungsweise orale Oberfläche 28 für das ausgehärtete Kunststoffmaterial eigentlich erfordern würde. Die Negativform 31 dient somit als Gießform zum Herstellen der okklusalen beziehungsweise oralen Seite der Prothesenbasis 24. Die so erzeugte Oberfläche in dem ersten Material ist in der schematischen Ansicht auf die Oberseite des derart bearbeiteten Fräskörpers 11 nach Figur 9 gut zu erkennen. Die Verbindungsoberfläche zwischen den Prothesenzähnen 26 und der Prothesenbasis 24 entspricht in Figur 9 der durch den Bereich des Vollkörpers 12 gebildeten Oberfläche, die Teil der Prothesenzähne 26 sind und die in Figur 9 bereits als Prothesenzähne 26 gekennzeichnet sind. In dieser Verbindungsoberfläche der Prothesenzähne 26 befinden sich Vertiefungen 27, in die zur stabileren Verbindung der fluide polymerisierbare Kunststoff eingefüllt wird.

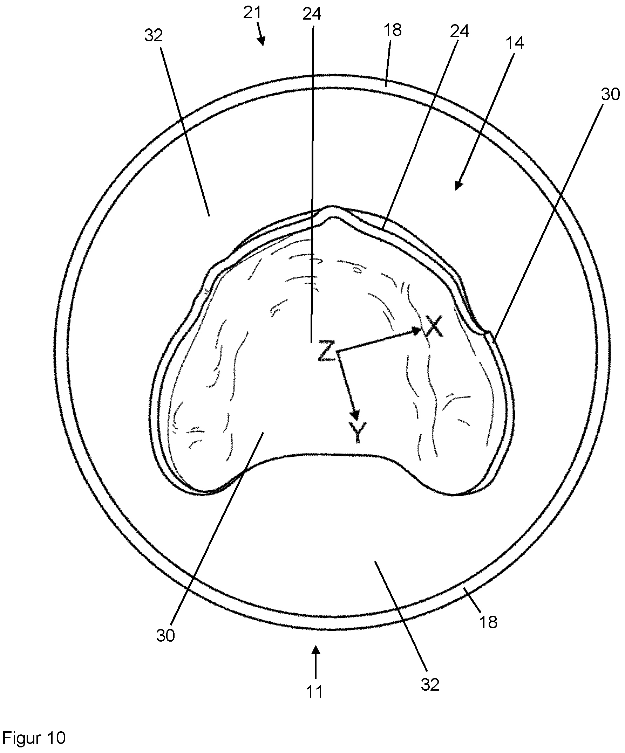

Zusätzlich kann eine Markierung an der umlaufenden Wandung 18 erzeugt werden. Anschließend kann die so neu erzeugte Oberfläche gereinigt werden. Danach kann der in Figur 9 gezeigte Hohlraum 14 bis zu der Markierung mit dem fluiden polymerisierbaren Kunststoff gefüllt beziehungsweise gestopft werden. Anschließend kann der fluide polymerisierbare Kunststoff (bevorzugt unter Druck und/oder bei einer erhöhten Temperatur gegenüber Raumtemperatur) ausgehärtet werden (bevorzugt für 30 bis 60 Minuten), um das ausgehärtete Kunststoffmaterial 32 (siehe Figur 10) zu bilden, aus dem die Prothesenbasis 24 hergestellt wird.

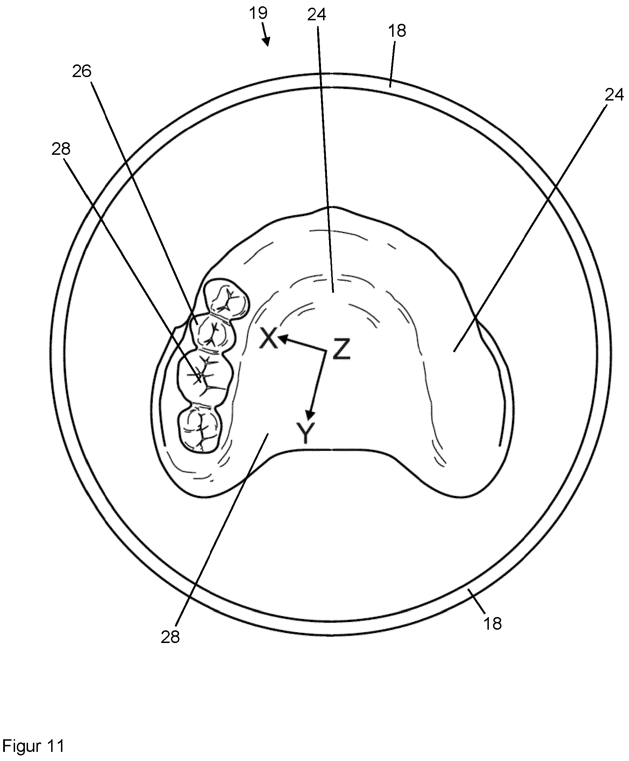

Nach dem Aushärten wird das so erhaltene Zwischenprodukt wieder in die subtraktive CAM-Vorrichtung (die Mehrachsfräse) eingespannte und die okklusale beziehungsweise orale Oberfläche 28 der Dentalprothese 22 (dieses Mal ohne den Offset) sowie die basale Oberfläche 30 der Dentalprothese 22 wird entsprechend dem virtuellen CAD-Modell der Dentalprothese 22 subtraktiv aus dem Zwischenprodukt gefertigt. Figur 10 zeigt hierzu eine schematische Ansicht auf die basale Seite 30 der Dentalprothese 22 nach dem subtraktiven Herausarbeiten aus dem polymerisierten ausgehärteten Kunststoffmaterial 32 bevor die Bearbeitung der okklusalen beziehungsweise oralen Seite 28 fertiggestellt ist und die Dentalprothese 22 von dem restlichen Fräskörper 11 gelöst wurde. Figur 11 zeigt schließlich die von der umlaufenden Wandung 18 gelöste Dentalprothese 22. Zur endgültigen Fertigstellung kann eine Reinigung, eine Politur und/oder eine Oberflächenbehandlung der Dentalprothese 22 als Nachbearbeitung erfolgen.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1, 11: Fräskörper
- 2, 12: Vollkörper
- 4, 14: Hohlraum
- 6, 16: Boden
- 8, 18: Wandung
- 9: Markierung
- 10, 20: Halterung
- 19: Unterseite
- 21: Oberseite
- 22: Dentalprothese
- 24: Prothesenbasis
- 26: Prothesenzähne
- 27: Ausnehmung
- 28: Okklusale Oberfläche / Orale Oberfläche
- 30: basale Oberfläche
- 31: Negativform
- 32: Kunststoffmaterial

## Patentansprüche

1. Fräskörper (1, 11) zur Herstellung eines dentalen Formkörpers, wobei der Fräskörper (1, 11) einen Vollkörper (2, 12) aus einem ersten Material aufweist, wobei das erste Material biokompatibel ist, wobei
auf einer Oberseite (21) des Fräskörpers (1, 11) ein Hohlraum (4, 14) zur Aufnahme eines fluiden polymerisierbaren Kunststoffs angeordnet ist, wobei der Hohlraum (4, 14) einen Boden (6, 16) aufweist und der Hohlraum (4, 14) ausgehend vom Rand des Bodens (6, 16) seitlich durch eine umlaufende Wandung (8, 18) begrenzt ist, wobei die umlaufende Wandung (8, 18) ringförmig ist und wobei der Vollkörper (2, 12) den Boden (6, 16) bildet und sich der Vollkörper (2, 12) bis zu einer Unterseite (19) des Fräskörpers (1, 11) erstreckt, die der Oberseite (21) des Fräskörpers (1, 11) gegenüberliegend angeordnet ist, wobei
der herzustellende dentale Formkörper eine Aufbissschiene ist, wobei das erste Material eine größere Härte aufweist als das ausgehärtete Kunststoffmaterial, oder der herzustellende dentale Formkörper eine Dentalprothese ist, wobei die Dentalprothese aus einer zahnfleischfarbenen beziehungsweise rosafarbenen Basis und zahnfarbenen Anteilen besteht.

2. Fräskörper (1, 11) nach Anspruch 1, **dadurch gekennzeichnet, dass**
die umlaufende Wandung (8, 18) eine Wandstärke von maximal 20 mm aufweist, bevorzugt von maximal 10 mm, besonders bevorzugt von maximal 5 mm aufweist, und/oder
die umlaufende Wandung (8, 18) zumindest 5 mm hoch ist, bevorzugt zumindest 15 mm hoch ist.

3. Fräskörper (1, 11) nach Anspruch 1 oder 2, **dadurch gekennzeichnet, dass**
an wenigstens einer den Hohlraum (4, 14) begrenzenden Innenseite der umlaufenden Wandung (8, 18) eine Markierung (9) zum Bestimmen eines Füllstands in dem Hohlraum (4, 14) angeordnet ist, wobei bevorzugt die Markierung (9) eine Skalierung mit äquidistanten Eichstrichen und/oder Zahlen aufweist, besonders bevorzugt eine Längenskala zum Bestimmen einer Füllhöhe oder eines Volumens des fluiden polymerisierbaren Kunststoffs in dem Hohlraum (4, 14), und/oder
der Boden (6, 16) des Hohlraums (4, 14) eben ist und/oder die umlaufende Wandung (8, 18) zum Inneren des Hohlraums (4, 14) hin eine zylindrische Oberfläche aufweist, wobei bevorzugt die umlaufende Wandung (8, 18) rohrförmig ist.

4. Fräskörper (1, 11) nach einem der vorangehenden Ansprüche, **dadurch gekennzeichnet, dass**
die umlaufende Wandung (8, 18) des Fräskörpers (1, 11) durch eine Rohrstück oder einen Ringkörper gebildet ist, das oder der an dem Vollkörper (2, 12) fixiert ist, wobei bevorzugt der Fräskörper (1, 11) aus dem ersten Material und dem Rohrstück oder dem Ringkörper besteht, oder
die umlaufende Wandung (8, 18) des Fräskörpers (1, 11) aus dem ersten Material besteht, wobei bevorzugt der Vollkörper (2, 12) und die umlaufende Wandung (8, 18) einteilig ausgeführt sind, so dass der Fräskörper (1, 11) aus dem ersten Material besteht.

5. Fräskörper (1, 11) nach einem der vorangehenden Ansprüche, **dadurch gekennzeichnet, dass**
das erste Material ein erstes Kunststoffmaterial ist, wobei vorzugsweise das erste Kunststoffmaterial endgehärtet ist, und/oder
das erste Material eine geschichtetes erstes Kunststoffmaterial mit mehreren Schichten unterschiedlicher Färbungen ist, wobei Schichtebenen der Schichten bevorzugt parallel zum Boden (6, 16) des Hohlraums (4, 14) angeordnet sind oder parallel zu einer Ebene angeordnet sind, die senkrecht zu der umlaufenden Wandung (8, 18), insbesondere parallel zu einer Grundfläche einer zylindrischen Innenwand der umlaufenden Wandung (8, 18) angeordnet sind.

6. Fräskörper (1, 11) nach einem der vorangehenden Ansprüche, **dadurch gekennzeichnet, dass**
der Fräskörper (1, 11) eine Ronde ist mit einem zylindrischen Außenumfang ist, wobei die umlaufende Wandung (8, 18) einen Teilbereich des zylindrischen Außenumfangs bildet, wobei bevorzugt an der Außenseite des zylindrischen Außenumfangs eine Halterung (10, 20) zur Fixierung der Ronde an einer CAM-Vorrichtung angeordnet ist, wobei besonders bevorzugt die Halterung (20) ein um den zylindrischen Außenumfang umlaufender vorstehender Ring ist, und/oder
der Fräskörper (1, 11) an einer Oberfläche außerhalb des Hohlraums (4, 14) wenigstens eine Positionsmarkierung aufweist, die von außen sichtbar ist und die eine Bestimmung der Lage und Orientierung des Fräskörpers (1, 11) in der CAM-Vorrichtung erlaubt, wobei die wenigstens eine Positionsmarkierung bevorzugt im Bereich zumindest einer Kante des Fräskörpers (1, 11) angeordnet ist, die aus Richtung der Oberseite (21) und/oder der Unterseite (19) des Fräskörpers (1, 11) sichtbar ist, wobei besonders bevorzugt zumindest zwei Positionsmarkierungen vorgesehen sind, die sowohl von der Oberseite (21) als auch von der Unterseite (19) des Fräskörpers (1, 11) aus sichtbar sind.

7. Fräskörper (1, 11) nach einem der vorangehenden Ansprüche, **dadurch gekennzeichnet, dass**
das Volumen des Materials der umlaufenden Wandung (8, 18) höchstens halb so groß ist wie das Volumen des Hohlraums (4, 14), bevorzugt das Volumen des Materials der umlaufenden Wandung (8, 18) höchsten ein Drittel so groß ist wie das Volumen des Hohlraums (4, 14), besonders bevorzugt das Volumen des Materials der umlaufenden Wandung (8, 18) höchsten ein Fünftel so groß ist wie das Volumen des Hohlraums (4, 14), und/oder
der Vollkörper (2, 12) eine umlaufende Stufe aufweist, auf die die umlaufende Wandung (8, 18) aufgesteckt ist, so dass die umlaufende Wandung (8, 18) mit einer Innenseite flächenbündig an dem Vollkörper (2, 12) anliegt, wobei bevorzugt die umlaufende Wandung (8, 18) vollflächig und umlaufend an den Vollkörper (2, 12) angeklebt ist.

8. Set zum Herstellen eines dentalen Formkörpers aufweisend einen Fräskörper (1, 11) nach einem der vorangehenden Ansprüche und zumindest einen fluiden polymerisierbaren Kunststoff und/oder Ausgangskomponenten zur Herstellung zumindest eines fluiden polymerisierbaren Kunststoffs, wobei bevorzugt das Set zusätzlich zumindest eine Vorrichtung zum Einfüllen des zumindest einen fluiden polymerisierbaren Kunststoffs und/oder zum Herstellen und Mischen des zumindest einen fluiden polymerisierbaren Kunststoffs aufweist, wobei
der herzustellende dentale Formkörper eine Aufbissschiene ist, wobei das erste Material eine größere Härte aufweist als das ausgehärtete Kunststoffmaterial, oder der herzustellende dentale Formkörper eine Dentalprothese ist, wobei die Dentalprothese aus einer zahnfleischfarbenen beziehungsweise rosafarbenen Basis und zahnfarbenen Anteilen besteht.

9. Verfahren zur Herstellung eines dentalen Formkörpers unter Verwendung eines Fräskörpers (1, 11) nach einem der Ansprüche 1 bis 7 oder unter Verwendung eines Sets nach Anspruch 8 oder unter Verwendung eines Fräskörpers (1, 11) zur Herstellung eines dentalen Formkörpers, wobei der Fräskörper (1, 11) einen Vollkörper (2, 12) aus einem ersten Material aufweist, wobei das erste Material biokompatibel ist, wobei auf einer Oberseite (21) des Fräskörpers (1, 11) ein Hohlraum (4, 14) zur Aufnahme eines fluiden polymerisierbaren Kunststoffs angeordnet ist, wobei der Hohlraum (4, 14) einen Boden (6, 16) aufweist und der Hohlraum (4, 14) ausgehend vom Rand des Bodens (6, 16) seitlich durch eine umlaufende Wandung (8, 18) begrenzt ist, wobei die umlaufende Wandung (8, 18) ringförmig ist und wobei der Vollkörper (2, 12) den Boden (6, 16) bildet und sich der Vollkörper (2, 12) bis zu einer Unterseite (19) des Fräskörpers (1, 11) erstreckt, die der Oberseite (21) des Fräskörpers (1, 11) gegenüberliegend angeordnet ist, wobei bei dem Verfahren der dentale Formkörper aus zumindest zwei unterschiedlichen Materialien gefertigt wird, die bei dem Verfahren miteinander verbunden werden,
wobei das Verfahren durch die folgenden chronologischen Schritte gekennzeichnet ist:
A) Herstellen einer Verbindungsoberfläche, wobei die Verbindungsoberfläche die Fläche zwischen dem ersten Material und dem aus dem fluiden polymerisierbaren Kunststoff herzustellenden ausgehärteten Kunststoffmaterial in dem herzustellenden dentalen Formkörper definiert, und Herstellen einer Negativform (31) eines Teilbereichs der Oberfläche des herzustellenden dentalen Formkörpers in dem Boden (6, 16) des Hohlraums (4, 14) des Fräskörpers (1, 11) und somit in dem ersten Material des Fräskörpers (1, 11) mit Hilfe eines subtraktiven CAM-Verfahrens nach Maßgabe eines virtuellen dreidimensionalen Modells einer äußeren Form des dentalen Formkörpers und einer virtuellen Form der Verbindungsoberfläche der zumindest zwei unterschiedlichen Materialien, wobei die Verbindungsoberfläche und die Negativform (31) aneinander angrenzen und wobei die umlaufende Wandung (8, 18) des Fräskörpers (1, 11) erhalten bleibt;
B) Einfüllen zumindest eines fluiden polymerisierbaren Kunststoffs in den Hohlraum (4, 14) des Fräskörpers (1, 11) und in das in Schritt A) abgetragene Volumen im Boden (6, 16) des Fräskörpers (1, 11), wobei der zumindest eine fluide polymerisierbare Kunststoff mit einem derartigen Füllstand in den Hohlraum (4, 14) gefüllt wird, dass die umlaufende Wandung (8, 18) in Kontakt mit wenigstens einem zuletzt eingefülltem oder außen aufgetragenem fluiden polymerisierbaren Kunststoff des zumindest einen fluiden polymerisierbaren Kunststoffs kommt, und Aushärten des zumindest einen fluiden polymerisierbaren Kunststoffs in dem Hohlraum (4, 14) und in dem in Schritt A) abgetragenen Volumen im Boden (6, 16) des Fräskörpers (1, 11), wobei beim Aushärten des zumindest einen fluiden polymerisierbaren Kunststoffs ein ausgehärtetes Kunststoffmaterial im Hohlraum (4, 14) des Fräskörpers (1, 11) entsteht, das mit dem ersten Material des Fräskörpers (1, 11) fest und flächenbündig verbunden ist;
C) Subtraktives Bearbeiten des ausgehärteten Kunststoffmaterials aus Richtung der Oberseite (21) des Fräskörpers (1, 11) mit einem CAM-Verfahren nach Maßgabe einer basalen Oberfläche des virtuellen Modells des dentalen Formkörpers und subtraktives Bearbeiten des ersten Materials aus Richtung der Unterseite (19) des Fräskörpers (1, 11) mit einem CAM-Verfahren nach Maßgabe einer okklusalen Oberfläche des virtuellen Modells des dentalen Formkörpers, so dass der dentale Formkörper aus dem ausgehärteten Kunststoffmaterial und dem damit verbundenen ersten Material subtraktiv herausgearbeitet wird.

10. Verfahren nach Anspruch 9, **dadurch gekennzeichnet, dass**
die Negativform (31) des Teilbereichs der Oberfläche des dentalen Formkörpers, die in Schritt A) in dem Boden (6, 16) des Hohlraums (4, 14) des Fräskörpers (1, 11) und in dem ersten Material des Fräskörpers (1, 11) hergestellt wird, mit einem Offset erzeugt wird, wobei der Offset das Volumen des virtuellen Modells des dentalen Formkörpers in einem Bereich vergrößert, in dem der dentale Formkörper nicht aus dem ersten Material bestehen soll, und/oder
der dentale Formkörper eine Aufbissschiene ist, wobei das erste Material eine größere Härte aufweist als das ausgehärtete Kunststoffmaterial, oder
der dentale Formkörper eine Dentalprothese (22) in Form einer dentalen Teilprothese oder Vollprothese ist, wobei die Dentalprothese (22) eine Prothesenbasis (24) und zumindest einen Prothesenzahn (26) aufweist und wobei der zumindest eine Prothesenzahn (26) aus dem ersten Material gefertigt wird und die Prothesenbasis (24) aus dem ausgehärteten Kunststoffmaterial gefertigt wird, wobei das erste Material zahnfarben ist und das ausgehärtete Kunststoffmaterial zahnfleischfarben ist, wobei vorzugsweise das erste Material eine größere Härte und/oder Abrasionsfestigkeit aufweist als das ausgehärtete Kunststoffmaterial.

11. Verfahren nach Anspruch 9 oder 10, **dadurch gekennzeichnet, dass**
in Schritt B) wenigstens einer der zumindest einen fluiden polymerisierbaren Kunststoffe beim Einfüllen zumindest die in Schritt A) im ersten Material erzeugten Oberflächen vollflächig benetzt, und/oder
in Schritt C) ein subtraktives Bearbeiten des ersten Materials und des ausgehärteten Kunststoffmaterials aus Richtung der Unterseite (19) des Fräskörpers (1, 11) mit dem CAM-Verfahren nach Maßgabe der okklusalen Oberfläche des virtuellen Modells des dentalen Formkörpers erfolgt und/oder
in Schritt C) ein subtraktives Bearbeiten des ausgehärteten Kunststoffmaterials und des ersten Materials aus Richtung der Oberseite (21) des Fräskörpers (1, 11) mit dem CAM-Verfahren nach Maßgabe der basalen Oberfläche des virtuellen Modells des dentalen Formkörpers erfolgt.

12. Verfahren nach einem der Ansprüche 9 bis 11, **dadurch gekennzeichnet, dass**
in Schritt A) an der den Hohlraum (4, 14) des Fräskörpers (1, 11) begrenzenden Innenseite der umlaufenden Wandung (8, 18) wenigstens eine Markierung (9) angebracht wird, insbesondere die wenigstens eine Markierung (9) durch das subtraktive CAM-Verfahren in der Innenseite der umlaufenden Wandung (8, 18) erzeugt wird, wobei der Abstand der wenigstens einen Markierung (9) vom Boden (6, 16) des Hohlraums (4, 14) nach Maßgabe des virtuellen Modells des dentalen Formkörpers bestimmt wird, wobei bevorzugt die wenigstens eine Markierung (9) wenigstens ein Eichstrich ist,
wobei in Schritt B) der zumindest eine fluide polymerisierbare Kunststoff bis zur Höhe der wenigstens eine Markierung (9) in der Hohlraum (4, 14) gefüllt wird, und/oder vor Schritt A) oder vor Schritt B) und nach Schritt A) ein Ringkörper oder ein Rohrstück an dem Vollkörper (2, 12) befestigt wird, so dass der Ringkörper oder das Rohrstück die umlaufende Wandung (8, 18) bildet, wobei bevorzugt der Ringkörper oder das Rohrstück nach Schritt B) und vor Schritt C) wieder entfernt wird.

13. Verfahren nach einem der Ansprüche 9 bis 12, **dadurch gekennzeichnet, dass**
vor Schritt C) eine Nullpunktverschiebung zum Festlegen der in Schritt B) erzeugten Ebene der Oberfläche des ausgehärteten Kunststoffmaterials berechnet wird, wobei in Schritt C) die Nullpunktverschiebung dahingehend berücksichtigt wird, dass das subtraktive Bearbeiten in der Ebene der Oberfläche des ausgehärteten Kunststoffmaterials beginnt, und/oder
in Schritt C) zumindest einmal die Position und Lage des in der CAM-Vorrichtung befestigten Fräskörpers (1, 11) anhand zumindest einer Markierung am Fräskörper (1, 11) bestimmt wird und die Position und Lage des Fräskörpers (1, 11) beim Steuern der CAM-Vorrichtung berücksichtigt wird, wobei vorzugsweise die Bestimmung der Position und Lage des in der CAM-Vorrichtung befestigten Fräskörpers (1, 11) vollautomatisch bestimmt wird.

14. Verfahren nach einem der Ansprüche 9 bis 13, **dadurch gekennzeichnet, dass** nach Schritt A) und vor Schritt B) ein Schritt A2) erfolgt:
A2) Reinigen und/oder Vorbehandeln der Verbindungsoberfläche oder der Verbindungsoberfläche und der Negativform (31) oder der gesamten frei zugänglichen Oberfläche des ersten Materials am Boden (6, 16) des Hohlraums (4, 14) einschließlich der Verbindungsoberfläche und der Negativform (31), wobei bevorzugt beim Vorbehandeln eine chemische Behandlung der Oberfläche des ersten Materials erfolgt, besonders bevorzugt ein chemisches Anquellen der Oberfläche des ersten Materials mit einer Monomerflüssigkeit, wobei das erste Material eine Kunststoffzusammensetzung enthaltend ein Polymethylmethacrylat (PMMA) oder bestehend aus einem PMMA ist, und/oder
das Einfüllen zumindest eines fluiden polymerisierbaren Kunststoffs in Schritt B) durch Stopfen erfolgt und/oder mit einem Überdruck durchgeführt wird, insbesondere in einem Drucktopf oder in einem Druckraum mit einem Druck über Normaldruck, bevorzugt mit einem Druck von mindestens 150 kPa, besonders bevorzugt mit einem Druck von mindestens 200 kPa, ganz besonders bevorzugt mit einem Druck von mindestens 200 kPa und höchstens 400 kPa.

15. Verfahren nach einem der Ansprüche 9 bis 14, **dadurch gekennzeichnet, dass** das Aushärten des fluiden polymerisierbaren Kunststoffs in Schritt B) durch Einwirken von Wärme und/oder Druck erfolgt, wobei bevorzugt das Aushärten über einen Zeitraum zwischen 10 Minuten und 120 Minuten erfolgt, besonders bevorzugt zwischen 30 Minuten und 60 Minuten.

## Claims

1. A milling body (1, 11) for producing a dental molding, wherein the milling body (1, 11) comprising a solid body (2, 12) made of a first material, the first material being biocompatible, wherein a cavity (4, 14) for receiving a fluid polymerizable plastics material is arranged on an upper side (21) of the milling body (1, 11), the cavity (4, 14) having a bottom (6, 16) and, starting from the edge of the bottom (6, 16), the cavity (4, 14) being laterally delimited by a circumferential wall (8, 18), the circumferential wall (8, 18) being annular, and wherein the solid body (2, 12) forming the bottom (6, 16) and the solid body (2, 12) extending as far as a lower side (19) of the milling body (1, 11), which lower side is arranged to be opposite the upper side (21) of the milling body (1, 11), wherein
the dental molding is an occlusal splint, wherein the first material has a greater hardness than the cured plastics material, or
the dental molding is a dental prosthesis, the dental prosthesis consisting of a gum-colored or respectively pink colored base and tooth-colored parts.

2. The milling body (1, 11) according to Claim 1, **characterized in that**
the circumferential wall (8, 18) has a wall thickness of at most 20 mm, preferably of at most 10 mm, particularly preferably of at most 5 mm, and/or
the circumferential wall (8, 18) is at least 5 mm high, preferably at least 15 mm high.

3. The milling body (1, 11) according to Claim 1 or 2, **characterized in that**
a marker (9) for determining a fill level in the cavity (4, 14) is arranged on at least one inner side of the circumferential wall (8, 18) delimiting the cavity (4, 14), the marker (9) preferably comprising a scale having equidistant calibration marks and/or numbers, particularly preferably a length scale for determining a fill level or a volume of the fluid polymerizable plastics material in the cavity (4, 14), and/or
the bottom (6, 16) of the cavity (4, 14) is flat and/or the circumferential wall (8, 18) has a cylindrical surface toward the interior of the cavity (4, 14), the circumferential wall (8, 18) preferably being tubular.

4. The milling body (1, 11) according to any one of the preceding claims, **characterized in that**
the circumferential wall (8, 18) of the milling body (1, 11) is formed by a tube piece or an annular body which is fixed to the solid body (2, 12), the milling body (1, 11) preferably consisting of the first material and the tube piece or the annular body, or
the circumferential wall (8, 18) of the milling body (1, 11) consists of the first material, the solid body (2, 12) and the circumferential wall (8, 18) preferably being formed in one piece, such that the milling body (1, 11) consists of the first material.

5. The milling body (1, 11) according to any one of the preceding claims, **characterized in that**
the first material is a first plastics material, the first plastics material preferably being finally cured, and/or
the first material is a layered first plastics material having a plurality of layers of different colors, with layer planes of the layers preferably being arranged in parallel with the bottom (6, 16) of the cavity (4, 14) or being arranged in parallel with a plane that is arranged to be perpendicular to the circumferential wall (8, 18), in particular in parallel with a base surface of a cylindrical inner wall of the circumferential wall (8, 18).

6. The milling body (1, 11) according to any one of the preceding claims, **characterized in that**
the milling body (1, 11) is a blank having a cylindrical outer circumference, the circumferential wall (8, 18) forming a part section of the cylindrical outer circumference, a holder (10, 20) for fixing the blank to a CAM device preferably being arranged on the outer side of the cylindrical outer circumference, the holder (20) particularly preferably being a protruding ring extending circumferentially around the cylindrical outer circumference, and/or
the milling body (1, 11) comprises at least one position marker on a surface outside the cavity (4, 14), which position marker is visible from the outside and allows the location and orientation of the milling body (1, 11) in the CAM device to be determined, the at least one position marker preferably being arranged in the region of at least one edge of the milling body (1, 11) which is visible from the direction of the upper side (21) and/or the lower side (19) of the milling body (1, 11), at least two position markers particularly preferably being provided which are visible both from the upper side (21) and from the lower side (19) of the milling body (1, 11).

7. The milling body (1, 11) according to any one of the preceding claims, **characterized in that**
the volume of the material of the circumferential wall (8, 18) is at most half as large as the volume of the cavity (4, 14), the volume of the material of the circumferential wall (8, 18) is preferably at most a third as large as the volume of the cavity (4, 14), the volume of the material of the circumferential wall (8, 18) is particularly preferably at most a fifth as large as the volume of the cavity (4, 14), and/or
the solid body (2, 12) comprises a circumferential shoulder, onto which the circumferential wall (8, 18) is placed, such that the circumferential wall (8, 18) fits flush with the solid body (2, 12) by an inner side, the circumferential wall (8, 18) preferably being bonded to the solid body (2, 12) circumferentially and over its entire surface.

8. A set for producing a dental molding comprising a milling body (1, 11) according to any one of the preceding claims and at least one fluid polymerizable plastics material and/or parent components for producing at least one fluid polymerizable plastics material, wherein the set preferably additionally comprises a device for introducing the at least one fluid polymerizable plastics material and/or for producing and mixing the at least one fluid polymerizable plastics material, wherein
the dental molding is an occlusal splint, wherein the first material has a greater hardness than the cured plastics material, or
the dental molding is a dental prosthesis, the dental prosthesis consisting of a gum-colored or respectively pink colored base and tooth colored parts.

9. A method for producing a dental molding using a milling body (1, 11) according to any one of Claims 1 to 7 or using a set according to Claim 8 or using a milling body (1, 11) for producing a dental molding, the milling body (1, 11) comprising a solid body (2, 12) made of a first material, the first material being biocompatible, wherein a cavity (4, 14) for receiving a fluid polymerizable plastics material is arranged on an upper side (21) of the milling body (1, 11), the cavity (4, 14) having a bottom (6, 16) and, starting from the edge of the bottom (6, 16), the cavity (4, 14) being laterally delimited by a circumferential wall (8, 18), the circumferential wall (8, 18) being annular, and the solid body (2, 12) forming the bottom (6, 16) and the solid body (2, 12) extending as far as a lower side (19) of the milling body (1, 11), which lower side is arranged to be opposite the upper side (21) of the milling body (1, 11), wherein, in the method, the dental molding is manufactured from at least two different materials, which are joined together in the method,
wherein the method is **characterized by** the following chronological steps:
A) producing a connecting surface, wherein the connecting surface defines the area between the first material and the cured plastic material to be produced from the fluid polymerizable plastic in the dental molding to be produced, and creating between the at least two different materials and a negative shape (31) of a part section of the surface of the dental molding to be produced in the bottom (6, 16) of the cavity (4, 14) in the milling body (1, 11) and thus in the first material of the milling body (1, 11) by means of a subtractive CAM method in accordance with a virtual three-dimensional model of an outer shape of the dental molding and a virtual shape of the connecting surface of the at least two different materials, the connecting surface and the negative shape (31) adjoining one another and the circumferential wall (8, 18) of the milling body (1, 11) being retained;
B) introducing at least one fluid polymerizable plastics material into the cavity (4, 14) in the milling body (1, 11) and into the volume removed in step A) in the bottom (6, 16) of the milling body (1, 11), the at least one fluid polymerizable plastics material being introduced into the cavity (4, 14) to a fill level that is such that the circumferential wall (8, 18) comes into contact with at least one last-introduced or externally applied fluid polymerizable plastics material of the at least one fluid polymerizable plastics material, and curing the at least one fluid polymerizable plastics material in the cavity (4, 14) and in the volume of in the bottom (6, 16) of the milling body (1, 11) removed in step A), a cured plastics material being formed in the cavity (4, 14) in the milling body (1, 11) that is connected to the first material of the milling body (1, 11) in a secure and flush manner when curing the at least one fluid polymerizable plastics material;
C) subtractively machining the cured plastics material from the direction of the upper side (21) of the milling body (1, 11) using a CAM method in accordance with a basal surface of the virtual model of the dental molding and subtractively machining the first material from the direction of the lower side (19) of the milling body (1, 11) using a CAM method in accordance with an occlusal surface of the virtual model of the dental molding, such that the dental molding is subtractively worked out of the cured plastics material and the first material connected thereto.

10. The method according to Claim 9, **characterized in that**
the negative shape (31) of the part section of the surface of the dental molding that is produced in step A) in the bottom (6, 16) of the cavity (4, 14) in the milling body (1, 11) and in the first material of the milling body (1, 11) is generated to have an offset, the offset enlarging the volume of the virtual model of the dental molding in a region in which the dental molding is not intended to consist of the first material, and/or
the dental molding is an occlusal splint, the first material having a greater hardness than the cured plastics material, or
the dental molding is a dental prosthesis (22) in the form of a partial or full dental prosthesis, the dental prosthesis (22) comprising a prosthesis base (24) and at least one prosthetic tooth (26) and the at least one prosthetic tooth (26) being manufactured from the first material and the prosthesis base (24) being manufactured from the cured plastics material, the first material being tooth-colored and the cured plastics material being gum-colored, the first material preferably having a greater hardness and/or abrasion resistance than the cured plastics material.

11. The method according to Claim 9 or 10, **characterized in that**
in step B), at least one of the at least one fluid polymerizable plastics materials fully wets at least the surfaces generated in the first material in step A) during introduction, and/or
in step C), the first material and the cured plastics material are subtractively machined from the direction of the lower side (19) of the milling body (1, 11) using the CAM method in accordance with the occlusal surface of the virtual model of the dental molding, and/or
in step C), the cured plastics material and the first material are subtractively machined from the direction of the upper side (21) of the milling body (1, 11) using the CAM method in accordance with the basal surface of the virtual model of the dental molding.

12. The method according to any one of Claims 9 to 11, **characterized in that**
in step A), at least one marker (9) is applied to the inner side of the circumferential wall (8, 18) delimiting the cavity (4, 14) in the milling body (1, 11), in particular, the at least one marker (9) is generated in the inner side of the circumferential wall (8, 18) by the subtractive CAM method, the distance between the at least one marker (9) and the bottom (6, 16) of the cavity (4, 14) being determined in accordance with the virtual model of the dental molding, the at least one marker (9) preferably being at least one calibration mark,
in step B), the at least one fluid polymerizable plastics material being introduced up to the height of the at least one marker (9) in the cavity (4, 14), and/or
before step A) or before step B) and after step A), an annular body or a tube piece is fastened to the solid body (2, 12), such that the annular body or the tube piece forms the circumferential wall (8, 18), the annular body or the tube piece preferably being removed again after step B) or before step C).

13. The method according to any one of the Claims 9 to 12, **characterized in that**
before step C), a zero shift is calculated to specify the plane of the surface of the cured plastics material generated in step B), and in step C), the zero shift is taken into account to the effect that the subtractive machining begins in the plane of the surface of the cured plastics material, and/or
in step C), the position and location of the milling body (1, 11) fastened in the CAM device is determined on the basis of at least one marker on the milling body (1, 11) at least once, and the position and location of the milling body (1, 11) is taken into account while controlling the CAM device, the determination of the position and location of the milling body (1, 11) fastened in the CAM device preferably being determined fully automatically.

14. The method according to any one of the Claims 9 to 13, **characterized in that** after step A) and before step B), a step A2) is carried out:
A2) cleaning and/or pretreating the connecting surface or the connecting surface and the negative shape (31) or all of the freely accessible surface of the first material on the bottom (6, 16) of the cavity (4, 14) including the connecting surface and the negative shape (31), a chemical treatment of the surface of the first material preferably taking place during the pretreatment, particularly preferably chemical swelling of the surface of the first material with a monomer liquid, the first material being a plastics composition containing a polymethyl methacrylate (PMMA) or consisting of a PMMA, and/or
the introduction of at least one fluid polymerizable plastics material in step B) takes place by plugging and/or is carried out at an overpressure, in particular in a pressure pot or in a pressure chamber having a pressure above normal pressure, preferably at a pressure of at least 150 kPa, particularly preferably at a pressure of at least 200 kPa, most particularly preferably at a pressure of at least 200 kPa and at most 400 kPa.

15. The method according to any one of the Claims 9 to 14, **characterized in that**
the curing of the fluid polymerizable plastics material in step B) takes place under the effect of heat and/or pressure, the curing preferably taking place over a period of between 10 minutes and 120 minutes, particularly preferably of between 30 minutes and 60 minutes.

## Revendications

1. Corps de fraisage (1, 11) pour la fabrication d'un corps moulé dentaire, le corps de fraisage (1, 11) présentant un corps plein (2, 12) en un premier matériau, le premier matériau étant biocompatible,
un espace creux (4, 14) destiné à recevoir une matière plastique fluide polymérisable étant disposé sur un côté supérieur (21) du corps de fraisage (1, 11), l'espace creux (4, 14) présentant un fond (6, 16) et l'espace creux (4, 14) étant délimité latéralement, à partir du bord du fond (6, 16), par une paroi périphérique (8, 18), la paroi périphérique (8, 18) étant de forme annulaire et le corps plein (2, 12) formant le fond (6, 16) et le corps plein (2, 12) s'étendant jusqu'à un côté inférieur (19) du corps de fraisage (1, 11) qui est disposée en face du côté supérieur (21) du corps de fraisage (1, 11),
le corps moulé dentaire à fabriquer étant une gouttière occlusale, le premier matériau présentant une dureté supérieure à celle du matériau en matière plastique durci, ou
le corps moulé dentaire à fabriquer étant une prothèse dentaire, la prothèse dentaire étant constituée d'une base de couleur gingivale ou de couleur rose et de parties de couleur dentaire.

2. Corps de fraisage (1, 11) selon la revendication 1, **caractérisé en ce que**
la paroi périphérique (8, 18) présente une épaisseur de paroi de 20 mm maximum, de préférence de 10 mm maximum, de manière particulièrement préférée de 5 mm maximum, et/ou
la paroi périphérique (8, 18) a une hauteur d'au moins 5 mm, de préférence d'au moins 15 mm.

3. Corps de fraisage (1, 11) selon la revendication 1 ou 2, **caractérisé en ce que** sur au moins un côté intérieur de la paroi périphérique (8, 18) délimitant l'espace creux (4, 14) est disposé un marquage (9) pour déterminer un niveau de remplissage dans l'espace creux (4, 14), le marquage (9) présentant de préférence une graduation avec des traits d'étalonnage et/ou des chiffres équidistants, de manière particulièrement préférée une échelle de longueur pour déterminer un niveau de remplissage ou un volume de la matière plastique fluide polymérisable dans l'espace creux (4, 14), et/ou
le fond (6, 16) de l'espace creux (4, 14) est plan et/ou la paroi périphérique (8, 18) présente une surface cylindrique vers l'intérieur de l'espace creux (4, 14), la paroi périphérique (8, 18) étant de préférence tubulaire.

4. Corps de fraisage (1, 11) selon l'une quelconque des revendications précédentes, **caractérisé en ce que**
la paroi périphérique (8, 18) du corps de fraisage (1, 11) est formée par une pièce tubulaire ou un corps annulaire qui est fixé(e) sur le corps plein (2, 12), le corps de fraisage (1, 11) étant de préférence constitué du premier matériau et de la pièce tubulaire ou du corps annulaire, ou bien
la paroi périphérique (8, 18) du corps de fraisage (1, 11) est constituée du premier matériau, de préférence le corps plein (2, 12) et la paroi périphérique (8, 18) étant réalisés en une seule pièce, de telle sorte que le corps de fraisage (1, 11) est constitué du premier matériau.

5. Corps de fraisage (1, 11) selon l'une quelconque des revendications précédentes, **caractérisé en ce que**
le premier matériau est un premier matériau en matière plastique, le premier matériau en matière plastique étant de préférence complètement durci, et/ou
le premier matériau est un premier matériau en matière plastique stratifié avec plusieurs couches de différentes colorations, des plans de couches des couches étant de préférence disposés parallèlement au fond (6, 16) de l'espace creux (4, 14) ou étant disposés parallèlement à un plan qui est perpendiculaire à la paroi périphérique (8, 18), en particulier parallèlement à une surface de base d'une paroi intérieure cylindrique de la paroi périphérique (8, 18).

6. Corps de fraisage (1, 11) selon l'une quelconque des revendications précédentes, **caractérisé en ce que**
le corps de fraisage (1, 11) est un disque avec une périphérie extérieure cylindrique, la paroi périphérique (8, 18) formant une zone partielle de la périphérie extérieure cylindrique, un support (10, 20) étant de préférence disposé sur le côté extérieur de la périphérie extérieure cylindrique pour la fixation du disque sur un dispositif CAM, de manière particulièrement préférée le support (20) étant un anneau en saillie entourant la périphérie extérieure cylindrique, et/ou
le corps de fraisage (1, 11) présente sur une surface à l'extérieur de l'espace creux (4, 14) au moins un marquage de position qui est visible de l'extérieur et qui permet de déterminer la position et l'orientation du corps de fraisage (1, 11) dans le dispositif CAM, l'au moins un marquage de position se trouvant de préférence dans la zone d'au moins un bord du corps de fraisage (1, 11) qui est visible de l'extérieur, 11) qui est visible depuis la direction du côté supérieur (21) et/ou du côté inférieur (19) du corps de fraisage (1, 11), au moins deux marquages de position étant de préférence prévus, qui sont visibles aussi bien depuis le côté supérieur (21) que depuis le côté inférieur (19) du corps de fraisage (1, 11).

7. Corps de fraisage (1, 11) selon l'une quelconque des revendications précédentes, **caractérisé en ce que**
le volume du matériau de la paroi périphérique (8, 18) est au plus égal à la moitié du volume de l'espace creux (4, 14), de préférence le volume du matériau de la paroi périphérique (8, 18) est au plus égal à un tiers du volume de l'espace creux (4, 14), de manière particulièrement préférée le volume du matériau de la paroi périphérique (8, 18) est au plus égal à un cinquième du volume de l'espace creux (4, 14), et/ou
le corps plein (2, 12) présente un gradin périphérique sur lequel la paroi périphérique (8, 18) est emboîtée, de telle sorte que la paroi périphérique (8, 18) s'applique avec un côté intérieur à fleur contre le corps plein (2, 12), la paroi périphérique (8, 18) étant de préférence collée sur toute sa surface et sur tout son pourtour contre le corps plein (2, 12).

8. Kit pour la fabrication d'un corps moulé dentaire présentant un corps de fraisage (1, 11) selon l'une quelconque des revendications précédentes et au moins une matière plastique fluide polymérisable et/ou des composants de départ pour la fabrication d'au moins une matière plastique fluide polymérisable, de préférence le kit présentant en outre au moins un dispositif pour l'introduction de l'au moins une matière plastique fluide polymérisable et/ou pour la préparation et le mélange de l'au moins une matière plastique fluide polymérisable,
le corps moulé dentaire à fabriquer étant une gouttière occlusale, le premier matériau présentant une dureté supérieure à celle du matériau en matière plastique durci, ou
le corps moulé dentaire à fabriquer étant une prothèse dentaire, la prothèse dentaire étant constituée d'une base de couleur gingivale ou de couleur rose et de parties de couleur dentaire.

9. Procédé de fabrication d'un corps moulé dentaire en utilisant un corps de fraisage (1, 11) selon l'une quelconque des revendications 1 à 7 ou en utilisant un kit selon la revendication 8 ou en utilisant un corps de fraisage (1, 11) pour la fabrication d'un corps moulé dentaire, le corps de fraisage (1, 11) présentant un corps plein (2, 12) en un premier matériau, le premier matériau étant biocompatible, un espace creux (4, 14) destiné à recevoir une matière plastique fluide polymérisable étant disposé sur un côté supérieur (21) du corps de fraisage (1, 11), l'espace creux (4, 14) présentant un fond (6, 16) et l'espace creux (4, 14) étant délimité latéralement, à partir du bord du fond (6, 16), par une paroi périphérique (8, 18), la paroi périphérique (8, 18) étant de forme annulaire et le corps plein (2, 12) formant le fond (6, 16) et le corps plein (2, 12) s'étendant jusqu'à un côté inférieur (19) du corps de fraisage (1, 11), qui est disposé à l'opposé du côté supérieur (21) du corps de fraisage (1, 11), procédé dans lequel le corps moulé dentaire est fabriqué à partir d'au moins deux matériaux différents qui sont reliés entre eux lors du procédé,
le procédé étant **caractérisé par** les étapes chronologiques suivantes :
A) la fabrication d'une surface de liaison, la surface de liaison définissant la surface entre le premier matériau et le matériau en matière plastique durci à produire à partir de la matière plastique polymérisable fluide dans le corps moulé dentaire à fabriquer, et la fabrication d'un moule négatif (31) d'une zone partielle de la surface du corps moulé dentaire à fabriquer dans le fond (6, 16) de l'espace creux (4, 14) du corps de fraisage (1, 11) et donc dans le premier matériau du corps de fraisage (1, 11) à l'aide d'un procédé CAM soustractif en fonction d'un modèle virtuel tridimensionnel d'une forme extérieure du corps moulé dentaire et d'une forme virtuelle de la surface de liaison des au moins deux matériaux différents, la surface de liaison et le moule négatif (31) étant adjacents l'un à l'autre et la paroi périphérique (8, 18) du corps de fraisage (1, 11) étant conservée ;
B) l'introduction d'au moins une matière plastique fluide polymérisable dans l'espace creux (4, 14) du corps de fraisage (1, 11) et dans le volume enlevé à l'étape A) dans le fond (6, 16) du corps de fraisage (1, 11), l'au moins une matière plastique fluide polymérisable étant introduite dans l'espace creux (4, 14) à un niveau tel que la paroi périphérique (8, 18) entre en contact avec au moins une matière plastique polymérisable fluide introduite en dernier ou appliquée à l'extérieur, de l'au moins une matière plastique polymérisable fluide, et le durcissement de l'au moins une matière plastique polymérisable fluide dans l'espace creux (4, 14) et dans le volume enlevé à l'étape A) dans le fond (6, 16) du corps de fraisage (1, 11) ; lors du durcissement de l'au moins une matière plastique polymérisable fluide, un matériau en matière plastique durci se formant dans l'espace creux (4, 14) du corps de fraisage (1, 11), qui est relié solidement et à fleur de surface avec le premier matériau du corps de fraisage (1, 11) ;
C) l'usinage soustractif du matériau en matière plastique durci depuis la direction du côté supérieur (21) du corps de fraisage (1, 11) par un procédé CAM en fonction d'une surface basale du modèle virtuel du corps moulé dentaire et l'usinage soustractif du premier matériau depuis la direction du côté inférieur (19) du corps de fraisage (1, 11) par un procédé CAM en fonction d'une surface occlusale du modèle virtuel du corps moulé dentaire, de telle sorte que le corps moulé dentaire est façonné par procédé soustractif à partir du matériau en matière plastique durci et du premier matériau qui y est lié.

10. Procédé selon la revendication 9, **caractérisé en ce que**
le moule négatif (31) de la zone partielle de la surface du corps moulé dentaire, qui est fabriqué à l'étape A) dans le fond (6, 16) de l'espace creux (4, 14) du corps de fraisage (1, 11) et dans le premier matériau du corps de fraisage (1, 11), est produit avec un décalage, le décalage augmentant le volume du modèle virtuel du corps moulé dentaire dans une zone dans laquelle le corps moulé dentaire ne doit pas être constitué du premier matériau, et/ou
le corps moulé dentaire est une gouttière occlusale, le premier matériau présentant une dureté supérieure à celle du matériau en matière plastique durcie, ou
le corps moulé dentaire est une prothèse dentaire (22) sous la forme d'une prothèse dentaire partielle ou complète, la prothèse dentaire (22) comprenant une base de prothèse (24) et au moins une dent de prothèse (26), et l'au moins une dent de prothèse (26) étant fabriquée à partir du premier matériau et la base de prothèse (24) étant fabriquée à partir du matériau en matière plastique durci, le premier matériau étant de la couleur des dents et le matériau en matière plastique durci étant de la couleur des gencives, de préférence le premier matériau ayant une dureté et/ou une résistance à l'abrasion supérieure(s) à celle(s) du matériau en matière durci.

11. Procédé selon la revendication 9 ou 10, **caractérisé en ce que**
dans l'étape B), au moins une de l'au moins une matière plastique polymérisable fluide mouille sur toute la surface lors du remplissage au moins les surfaces produites dans l'étape A) dans le premier matériau, et/ou
dans l'étape C), on effectue un usinage soustractif du premier matériau et du matériau en matière plastique durci en direction du côté inférieur (19) du corps de fraisage (1, 11) par le procédé CAM en fonction de la surface occlusale du modèle virtuel du corps moulé dentaire et/ou
dans l'étape C), on effectue un usinage soustractif du matériau en matière plastique durci et du premier matériau depuis la direction du côté supérieur (21) du corps de fraisage (1, 11) par le procédé CAM en fonction de la surface basale du modèle virtuel du corps moulé dentaire.

12. Procédé selon l'une quelconque des revendications 9 à 11, **caractérisé en ce que**
dans l'étape A), au moins un marquage (9) est réalisé sur le côté intérieur de la paroi périphérique (8, 18) délimitant l'espace creux (4, 14) du corps de fraisage (1, 11), en particulier l'au moins un marquage (9) est réalisé par le procédé CAM soustractif dans le côté intérieur de la paroi périphérique (8, 18), la distance de l'au moins un marquage (9) par rapport au fond (6, 16) de l'espace creux (4, 14) étant déterminée en fonction du modèle virtuel du corps moulé dentaire, l'au moins un marquage (9) étant de préférence au moins un trait de repère,
dans l'étape B), l'au moins une matière plastique fluide polymérisable étant introduite jusqu'à la hauteur de l'au moins un marquage (9) dans l'espace creux (4, 14), et/ou
avant l'étape A) ou avant l'étape B) et après l'étape A), un corps annulaire ou une pièce tubulaire étant fixé(e) sur le corps plein (2, 12), de sorte que le corps annulaire ou la pièce tubulaire forme la paroi périphérique (8, 18), le corps annulaire ou la pièce tubulaire étant de préférence retiré(e) après l'étape B) et avant l'étape C).

13. Procédé selon l'une quelconque des revendications 9 à 12, **caractérisé en ce que**
avant l'étape C), un décalage de point zéro est calculé pour fixer le plan de la surface du matériau en matière plastique durcie créé à l'étape B), le décalage de point zéro étant pris en compte à l'étape C) de telle sorte que l'usinage soustractif commence dans le plan de la surface du matériau en matière plastique durcie, et/ou
dans l'étape C), on détermine au moins une fois la position et l'orientation du corps de fraisage (1, 11) fixé dans le dispositif CAM à l'aide d'au moins un marquage sur le corps de fraisage (1, 11) et on tient compte de la position et de l'orientation du corps de fraisage (1, 11) lors de la commande du dispositif CAM, de préférence la détermination de la position et de l'orientation du corps de fraisage (1, 11) fixé dans le dispositif CAM étant déterminée de manière entièrement automatique.

14. Procédé selon l'une quelconque des revendications 9 à 13, **caractérisé en ce que**
une étape A2) est effectuée après l'étape A) et avant l'étape B) :
A2) le nettoyage et/ou le prétraitement de la surface de liaison ou de la surface de liaison et du moule négatif (31) ou de la totalité de la surface librement accessible du premier matériau au fond (6, 16) de l'espace creux (4, 14), y compris la surface de liaison et le moule négatif (31), un traitement chimique de la surface du premier matériau étant de préférence effectué lors du prétraitement, de manière particulièrement préférée un gonflement chimique de la surface du premier matériau avec un liquide monomère, le premier matériau étant une composition de matière plastique contenant un poly(méthacrylate de méthyle) (PMMA) ou consistant en un PMMA, et/ou
l'introduction d'au moins une matière plastique fluide polymérisable à l'étape B) est effectuée par bouchage et/ou est réalisée avec une surpression, en particulier dans un pot sous pression ou dans une chambre de pression avec une pression supérieure à la pression normale, de préférence avec une pression d'au moins 150 kPa, de manière particulièrement préférée avec une pression d'au moins 200 kPa, de manière tout particulièrement préférée avec une pression d'au moins 200 kPa et d'au plus 400 kPa.

15. Procédé selon l'une quelconque des revendications 9 à 14, **caractérisé en ce que**
le durcissement de la matière plastique fluide polymérisable dans l'étape B) s'effectue par l'action de la chaleur et/ou de la pression, de préférence le durcissement s'effectuant pendant une durée comprise entre 10 minutes et 120 minutes, de manière particulièrement préférée entre 30 minutes et 60 minutes.
